(19) Europäisches Patentamt
European Patent Office
Office européen des brevets

(11) EP 4 484 465 A1

# (12) EUROPEAN PATENT APPLICATION

published in accordance with Art. 153(4) EPC

(43) Date of publication:
**01.01.2025 Bulletin 2025/01**

(21) Application number: **23760016.8**

(22) Date of filing: **22.02.2023**

(51) International Patent Classification (IPC):
***C08G 69/40*** (2006.01) ***C08L 25/04*** (2006.01)
***C08L 67/00*** (2006.01) ***C08L 77/00*** (2006.01)
***C08L 101/00*** (2006.01) ***C08L 71/02*** (2006.01)
***B33Y 10/00*** (2015.01) ***B29C 64/118*** (2017.01)
***C08G 63/66*** (2006.01) ***B33Y 70/00*** (2020.01)

(52) Cooperative Patent Classification (CPC):
**B29C 64/118; B33Y 10/00; B33Y 70/00; C08G 63/66; C08G 69/40; C08L 25/04; C08L 67/00; C08L 71/02; C08L 77/00; C08L 101/00**

(86) International application number:
**PCT/JP2023/006384**

(87) International publication number:
**WO 2023/163017 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.02.2022 JP 2022028565**

(71) Applicant: **ADEKA CORPORATION**
**Arakawa-ku**
**Tokyo**
**116-8554 (JP)**

(72) Inventors:
- **NAKAMURA, Tatsuhito**
  **Tokyo 116-8554 (JP)**
- **ASAKAWA, Motoko**
  **Tokyo 116-8554 (JP)**
- **IIMORI, Yuko**
  **Tokyo 116-8554 (JP)**

(74) Representative: **Müller-Boré & Partner Patentanwälte PartG mbB**
**Friedenheimer Brücke 21**
**80639 München (DE)**

## (54) THERMOPLASTIC RESIN COMPOSITION FOR FUSED DEPOSITION MODELING, MODELED BODY, AND METHOD FOR PRODUCING SAME

(57) To provide a thermoplastic resin composition for fused deposition modeling, capable of obtaining a modeled body which is excellent in modeling performance and antistatic performance, which can be colored into various colors, and which has diverse design properties, a modeled body which is obtained with the thermoplastic resin composition by fused deposition modeling, and which not only is excellent in antistatic performance and but also has excellent design properties by coloration, and a method for producing the modeled body. A thermoplastic resin composition for fused deposition modeling, containing 3 to 45 parts by mass of one or more kinds of a polymeric compound (G) having the following polyether segment (A) and polymer segment (B), based on 100 parts by mass of a thermoplastic resin: Polyether segment (A): a polyether segment derived from a compound (a) having one or more ethyleneoxy groups and having a hydroxyl group at each of both ends; Polymer segment (B): one or more polymer segments selected from the group consisting of a polyester segment (D) and a polyamide segment (E).

EP 4 484 465 A1

## Description

### TECHNICAL FIELD

The present invention relates to a thermoplastic resin composition for fused deposition modeling (hereinafter, also simply referred to as "resin composition"), a modeled body obtained by fused deposition modeling with the thermoplastic resin composition, and a method for producing the modeled body.

### BACKGROUND ART

Three-dimensional modeling (also referred to as "additive manufacturing" or "3D printing") techniques have been recently increasingly applied in various fields because of being advantageous in that resin products or the like can be produced without any molds and produced articles are high in degree of shape freedom. In particular, additive manufacturing apparatuses for fused deposition modeling (FDM) systems are relatively inexpensive as compared with apparatuses for other systems, and thus are increasingly widespread not only for industrial use, but also for home use. FDM systems are systems for modeling cubic products by ejection of fused thermoplastic resins through nozzles and deposition thereof.

While thermoplastic resins used as materials for FDM systems have been conventionally mainly acrylonitrile-butadiene-styrene copolymer (ABS) resins and polylactic acid, condensation type thermoplastic resins such as polyamides, polycarbonates, and polyesters have increasingly attracted attention in order to improve workability and mechanical strength. However, thermoplastic resins have the problem of being so high in insulation properties and, therefore, being easily charged by friction or the like. If modeled bodies are charged, static electricity has an adverse effect on electric and electronic equipment, and generation of static electricity is largely problematic particularly in an application where there is a concern about ignition by a spark.

On the contrary, Patent Documents 1 and 2 each have proposed a thermoplastic resin filament in which a carbonaceous material such as a carbon fiber or nano-carbon is compounded as an antistatic material to a thermoplastic resin.

In addition, Patent Document 3 has proposed use of an antistatic agent in a method for producing a three-dimensionally modeled product. Furthermore, Patent Document 4 has proposed a polymer type antistatic agent capable of imparting antistatic performance to a thermoplastic resin.

### RELATED ART DOCUMENTS

### PATENT DOCUMENTS

[Patent Document 1] JP 2016-28887 A
[Patent Document 2] JP 2021-91220 A
[Patent Document 3] JP 2005-254583 A
[Patent Document 4] WO 2020/202642

### SUMMARY OF THE INVENTION

### PROBLEMS TO BE SOLVED BY THE INVENTION

However, a case where a carbonaceous material is compounded as an antistatic material to a thermoplastic resin as in the techniques of Patent Documents 1 and 2 has the disadvantage of not allowing for coloration of a filament with a pigment due to a black color of the carbonaceous material, and the color of a modeled body obtained from the filament is only a black color. In addition, the carbonaceous material has the problem of significantly wearing a heating nozzle made of metal in a 3D printing apparatus (also referred to as "3D printer"), and furthermore has the problem of causing contamination of not only the modeled body and the apparatus, but also the surrounding of the apparatus, due to a substance lost by wearing.

The technique described in Patent Document 3 is to produce a modeled product by binding a powder material layer by a binding agent in an imagewise manner and sequentially stacking a cross section shape made of such a thin layer bound, and is a modeling method clearly different from fused deposition modeling. Furthermore, the antistatic agent in Patent Document 3 is compounded to a powder material in order to prevent the powder from being scattered or attached due to static electricity during modeling. Accordingly, no findings of the present invention can be achieved.

Furthermore, the technique described in Patent Document 4 is also neither described, nor supposed to be usable for three-dimensional modeling, and no findings of three-dimensional modeling can also be achieved.

Furthermore, some components to be compounded for imparting antistatic performance to a thermoplastic resin, depending on the type thereof, may have an adverse effect on modeling performance, for example, may cause bleed and/or stringing from a nozzle during modeling, and/or may allow for no production of any modeled body due to inferior interlayer adhesiveness between resins, and a thermoplastic resin for fused deposition modeling is needed to have excellent modeling performance.

An object of the present invention is then to provide a thermoplastic resin composition for fused deposition modeling, capable of obtaining a modeled body which is excellent in modeling performance and antistatic performance, furthermore which can be colored into various colors, namely, which is excellent in colorability, and which has diverse design properties, a modeled body which is obtained from the thermoplastic resin composition by fused deposition modeling and which not only is excellent in antistatic performance, but also has excellent design properties by coloration, and a method for producing a modeled body with the thermoplastic resin composition by fused deposition modeling. Another object of the present invention is to provide an antistatic agent for fused deposition modeling, to be used to obtain a modeled body which is excellent in modeling performance and antistatic performance, furthermore which can be colored into various colors, namely, which is excellent in colorability, and which has diverse design properties. An additional object of the present invention is to provide use of an agent for obtaining a modeled body which is excellent in modeling performance and antistatic performance, furthermore which can be colored into various colors, namely, which is excellent in colorability, and which has diverse design properties, as an antistatic agent for fused deposition modeling, and a method for using the agent as an antistatic agent for fused deposition modeling.

MEANS FOR SOLVING THE PROBLEMS

The present inventors have made intensive studies in order to solve the above problems, and as a result, have found that the above problems can be solved by the following configuration, thereby leading to the completion of the present invention.

Specifically, the present invention provides a thermoplastic resin composition for fused deposition modeling, containing 3 to 45 parts by mass of one or more kinds of a polymeric compound (G) having the following polyether segment (A) and polymer segment (B), based on 100 parts by mass of a thermoplastic resin.

Polyether segment (A): a polyether segment derived from a compound (a) having one or more ethyleneoxy groups and having a hydroxyl group at each of both ends.

Polymer segment (B): one or more polymer segments selected from the group consisting of a polyester segment (D) and a polyamide segment (E).

The present invention also provides the thermoplastic resin composition for fused deposition modeling, wherein the polymeric compound (G) is
a polymeric compound (G1) having a structure which not only has a polyether segment derived from polyethylene glycol (a1), as the polyether segment (A), but also has the polyester segment (D) as the polymer segment (B), the polyester segment (D) being a segment derived from a polyester (d3) obtained from a diol (d1) and a dicarboxylic acid (d2).

The present invention further provides the thermoplastic resin composition for fused deposition modeling, wherein the diol (d1) is at least one selected from 1,4-butanediol and ethylene glycol, and the dicarboxylic acid (d2) is succinic acid, or a dicarboxylic acid mixture containing succinic acid.

The present invention furthermore provides the thermoplastic resin composition for fused deposition modeling, wherein the polymeric compound (G1) is one or more kinds of a polymeric compound (G2) obtained by reaction of the polyethylene glycol (a1), the polyester (d3) obtained from the diol (d1) and the dicarboxylic acid (d2), and an epoxy compound (C) having two or more epoxy groups.

The present invention furthermore provides the thermoplastic resin composition for fused deposition modeling, wherein the polymeric compound (G2) has a structure

which not only has a polyether block (A') constituted from the polyethylene glycol (a1), as the polyether segment (A), but also has a polyester block (D') constituted from the polyester (d3), as the polyester segment (D), and
which is obtained by binding via an ester bond or an ether bond formed by reaction of a hydroxyl group at an end of the polyethylene glycol (a1), a hydroxyl group or a carboxyl group at an end of the polyester (d3), and an epoxy group of the epoxy compound (C) or a hydroxyl group formed by reaction of the epoxy group.

The present invention furthermore provides the thermoplastic resin composition for fused deposition modeling, wherein the polymeric compound (G2) has a structure which is obtained by binding a block polymer (H) having a carboxyl group at each of both ends, the polymer being obtained by alternately binding the polyether block (A') and the polyester block (D') repeatedly via an ester bond, and the epoxy compound (C), via an ester bond.

The present invention furthermore provides the thermoplastic resin composition for fused deposition modeling, wherein the polymeric compound (G) is a block polymer (G3) having a structure

which not only has a polyether block (A') constituted from a compound (a) having one or more ethyleneoxy groups and having a hydroxyl group at each of both ends, as the polyether segment (A), but also has the polyamide segment (E) as the polymer segment (B), the polyamide segment (E) being a polyamide block (E'), and
in which the polyether block (A') and the polyamide block (E') are repeatedly bound via at least one bond selected from the group consisting of an ester bond, an amide bond, an ether bond, an imide bond and a urethane bond.

The present invention furthermore provides the thermoplastic resin composition for fused deposition modeling, further containing 0.005 to 10 parts by mass of one or more selected from the group consisting of an alkali metal salt and an ionic liquid, based on 100 parts by mass of the thermoplastic resin.
The present invention furthermore provides the thermoplastic resin composition for fused deposition modeling, further containing 0.0005 to 10 parts by mass of one or more kinds of a colorant, based on 100 parts by mass of the thermoplastic resin.
The present invention furthermore provides the thermoplastic resin composition for fused deposition modeling, wherein the thermoplastic resin is one or more selected from the group consisting of an aromatic polyester, a degradable aliphatic polyester, a polystyrene-based resin, a copolymer of a polystyrene-based resin, an alloy of a polystyrene-based resin and an alloy of a copolymer of a polystyrene-based resin.
The present invention provides a filament for fused deposition modeling, obtained from the thermoplastic resin composition for fused deposition modeling.
The present invention also provides the filament for fused deposition modeling, having a thread-like shape having an average diameter of 1.55 to 1.95 mm.
The present invention provides a pellet for fused deposition modeling, obtained from the thermoplastic resin composition for fused deposition modeling.
The present invention provides a modeled body obtained from the thermoplastic resin composition for fused deposition modeling, by fused deposition modeling.
The present invention provides a modeled body obtained from the filament for fused deposition modeling, by fused deposition modeling.
The present invention provides a modeled body obtained from the pellet for fused deposition modeling, by fused deposition modeling.
The present invention provides a method for producing a modeled body, comprising producing a modeled body with any of the thermoplastic resin composition for fused deposition modeling, the filament for fused deposition modeling, and the pellet for fused deposition modeling, by fused deposition modeling.
The present invention provides an antistatic agent for fused deposition modeling, containing one or more kinds of a polymeric compound (G) having the following polyether segment (A) and polymer segment (B).
Polyether segment (A): a polyether segment derived from a compound (a) having one or more ethyleneoxy groups and having a hydroxyl group at each of both ends.
Polymer segment (B): one or more polymer segments selected from the group consisting of a polyester segment (D) and a polyamide segment (E).
The present invention provides use of an agent containing one or more kinds of a polymeric compound (G) having the following polyether segment (A) and polymer segment (B), as an antistatic agent for fused deposition modeling.
Polyether segment (A): a polyether segment derived from a compound (a) having one or more ethyleneoxy groups and having a hydroxyl group at each of both ends.
Polymer segment (B): one or more polymer segments selected from the group consisting of a polyester segment (D) and a polyamide segment (E).
The present invention provides a method for using an agent containing one or more kinds of a polymeric compound (G) having the following polyether segment (A) and polymer segment (B), as an antistatic agent for fused deposition modeling.
Polyether segment (A): a polyether segment derived from a compound (a) having one or more ethyleneoxy groups and having a hydroxyl group at each of both ends.
Polymer segment (B): one or more polymer segments selected from the group consisting of a polyester segment (D) and a polyamide segment (E).

## EFFECTS OF THE INVENTION

According to the present invention, it is possible to provide a thermoplastic resin composition for fused deposition modeling, capable of obtaining a modeled body which is excellent in modeling performance and antistatic performance,

furthermore which can be colored into various colors, namely, which is excellent in colorability, and which has diverse design properties, a modeled body which is obtained from the thermoplastic resin composition by fused deposition modeling and which not only is excellent in antistatic performance, but also has excellent design properties by coloration, and a method for producing a modeled body with the thermoplastic resin composition by fused deposition modeling. According to the present invention, it is possible to provide an antistatic agent for fused deposition modeling, to be used to obtain a modeled body which is excellent in modeling performance and antistatic performance, furthermore which can be colored into various colors, namely, which is excellent in colorability, and which has diverse design properties. According to the present invention, it is possible to provide use of an agent for obtaining a modeled body which is excellent in modeling performance and antistatic performance, furthermore which can be colored into various colors, namely, which is excellent in colorability, and which has diverse design properties, as an antistatic agent for fused deposition modeling, and a method for using the agent as an antistatic agent for fused deposition modeling.

MODE FOR CARRYING OUT THE INVENTION

Hereinafter, embodiments of the present invention are described in detail.

The thermoplastic resin composition for fused deposition modeling of the present invention contains 3 to 45 parts by mass of one or more kinds of a polymeric compound (G) having the following polyether segment (A) and polymer segment (B), based on 100 parts by mass of a thermoplastic resin.

Polyether segment (A): a polyether segment derived from a compound (a) having one or more ethyleneoxy groups and having a hydroxyl group at each of both ends.

Polymer segment (B): one or more polymer segments selected from the group consisting of a polyester segment (D) and a polyamide segment (E).

The fused deposition modeling in the present invention means three-dimensional modeling with a fused deposition modeling system. The fused deposition modeling system is one modeling system of three-dimensional modeling, and is a system in which a thermoplastic resin having a shape such as a pellet-like or thread-like (also referred to as "filament-like") shape is heated and molten in a modeling apparatus, then ejected through a nozzle, and cooled and solidified with deposition layer by layer, to model a cubic product.

First, the thermoplastic resin in the resin composition of the present invention is described.

Examples of the thermoplastic resin can include polyolefin-based resins and copolymers thereof, for example, α-olefin polymers such as polypropylene, high-density polyethylene, low-density polyethylene, linear low-density polyethylene, crosslinked polyethylene, ultra-high molecular weight polyethylene, polybutene-1, poly-3-methylpentene, and poly-4-methylpentene, or an ethylene-vinyl acetate copolymer, an ethylene-ethyl acrylate copolymer, and an ethylene-propylene copolymer; halogen-containing resins such as polyvinyl chloride, polyvinylidene chloride, chlorinated polyethylene, chlorinated polypropylene, polyvinylidene fluoride, chlorinated rubber, a vinyl chloride-vinyl acetate copolymer, a vinyl chloride-ethylene copolymer, a vinyl chloride-vinylidene chloride copolymer, a vinyl chloride-vinylidene chloride-vinyl acetate terpolymer, a vinyl chloride-acrylate copolymer, a vinyl chloride-maleate copolymer, and a vinyl chloride-cyclohexylmaleimide copolymer; a petroleum resin, a coumarone resin, polystyrene, polyvinyl acetate, an acrylic resin, and a copolymer of styrene and/or α-methylstyrene with any other monomer (for example, maleic anhydride, phenylmaleimide, methyl methacrylate, butadiene, or acrylonitrile) (for example, acrylonitrile-styrene copolymer (AS) resin, ABS resin, acrylonitrile-chlorinated polyethylene-styrene copolymer (ACS) resin, styrene-butadiene-styrene block copolymer (SBS) resin, methyl methacrylate-butadiene-styrene copolymer (MBS) resin, and heat-resistant ABS resin); polymethyl methacrylate, polyvinyl alcohol, polyvinyl formal, and polyvinyl butyral; aromatic polyesters, for example, polyalkylene terephthalates such as polyethylene terephthalate, polybutylene terephthalate, and polycyclohexanedimethylene terephthalate, and polyalkylene naphthalates such as polyethylene naphthalate and polybutylene naphthalate, and linear polyesters such as polytetramethylene terephthalate; degradable aliphatic polyesters such as polyhydroxybutyrate, polycaprolactone, polybutylene succinate, polyethylene succinate, polylactic acid (PLA resin), polymalic acid, polyglycol acid, polydioxane, and poly(2-oxetanone); and thermoplastic resins, for example, polyphenylene oxide, polyamides such as polycaprolactam and polyhexamethylene adipamide, polycarbonate (PC), polycarbonate/ABS resin, branched polycarbonate, polyacetal, polyphenylene sulfide, polyurethane, a cellulose-based resin, a polyimide resin, polysulfone, polyphenylene ether, polyether ketone, polyether ether ketone, and a liquid crystal polymer, and blended products thereof.

In addition, the thermoplastic resin may be any elastomer such as isoprene rubber, butadiene rubber, acrylonitrile-butadiene-copolymerized rubber, styrene-butadiene-copolymerized rubber, fluororubber, silicone rubber, an olefin-based elastomer, a styrene-based elastomer, a polyester-based elastomer, a nitrile-based elastomer, a nylon-based elastomer, a vinyl chloride-based elastomer, a polyamide-based elastomer, or a polyurethane-based elastomer. Furthermore, examples of the thermoplastic resin usable in the present invention include a fluorine-based resin and a silicone resin. Such a thermoplastic resin may be used singly or in combination of two or more kinds thereof in the resin composition of the present invention. The thermoplastic resin may be alloyed.

Such a thermoplastic resin can be used regardless of the molecular weight, the degree of polymerization, the

density, the softening point, the proportion of an insoluble fraction in a solvent, the degree of stereoregularity, the presence of a catalyst residue, the type and the compounding ratio of a monomer serving as a raw material, the type of a polymerization catalyst (for example, Ziegler catalyst or metallocene catalyst), a polymerization method (for example, bulk polymerization or suspension polymerization), and the like.

Among these thermoplastic resins, an amorphous or low-crystalline thermoplastic resin is preferred, in particular, one or more selected from the group consisting of an aromatic polyester, a degradable aliphatic polyester, a polystyrene-based resin, a copolymer of a polystyrene-based resin, an alloy of a polystyrene-based resin and an alloy of a copolymer of a polystyrene-based resin are preferred, and specifically a polyalkylene terephthalate such as polycyclohexanedimethylene terephthalate, polylactic acid (PLA resin), an alloy of polylactic acid and an elastomer, an ABS resin, an AS resin, polystyrene, high-impact polystyrene (HIPS), or a polycarbonate/ABS resin alloy is preferred, from the viewpoint of modeling stability in fused deposition modeling, such as low warpage or low shrinkage, and from the viewpoint of compatibility with antistatic performance.

Next, the polymeric compound (G) in the resin composition of the present invention is described.

In the present invention, the polymeric compound (G) has the following polyether segment (A) and polymer segment (B).

Polyether segment (A): a polyether segment derived from a compound (a) having one or more ethyleneoxy groups and having a hydroxyl group at each of both ends.

Polymer segment (B): one or more polymer segments selected from the group consisting of a polyester segment (D) and a polyamide segment (E).

In the present invention, the polyether segment (A) is a polyether segment derived from a compound (a) having one or more ethyleneoxy groups and having a hydroxyl group at each of both ends, and such an ethyleneoxy group is here a group represented by the following general formula (1).

$$-CH_2-CH_2-O- \qquad (1)$$

The compound (a), which has one or more such ethyleneoxy groups each represented by the general formula (1) and has a hydroxyl group at each of both ends, is preferably a compound having hydrophilicity, more preferably a polyether having the ethyleneoxy group represented by the general formula (1), and is still more preferably polyethylene glycol (a1), particularly preferably polyethylene glycol represented by the following general formula (2), from the viewpoint of modeling performance, antistatic performance, and colorability.

$$HO-\left[-CH_2-CH_2-O-\right]_m-H \qquad (2)$$

In the general formula (2), m represents a number of 5 to 250. m is preferably 20 to 200, more preferably 40 to 180 from the viewpoint of modeling performance, antistatic performance and colorability.

Examples of the compound (a) include, in addition to polyethylene glycol obtained by addition reaction of ethylene oxide, polyether obtained by addition reaction of ethylene oxide and one or more kinds of any other alkylene oxide (for example, propylene oxide, 1,2-, 1,4-, 2,3- or 1,3-butylene oxide), and this polyether may be random or block one.

Further examples of the compound (a) include a compound having a structure obtained by addition of ethylene oxide to an active hydrogen atom-containing compound, and a compound having a structure obtained by addition of ethylene oxide and one or more kinds of any other alkylene oxide (for example, propylene oxide, 1,2-, 1,4-, 2,3- or 1,3-butylene oxide). Such a compound may be obtained by any of random addition and block addition.

Examples of the active hydrogen atom-containing compound include glycol, divalent phenol, primary monoamine, secondary diamine, and dicarboxylic acid.

Examples of the glycol which can be here used include an aliphatic glycol having 2 to 20 carbon atoms, an alicyclic glycol having 5 to 12 carbon atoms and an aromatic glycol having 8 to 26 carbon atoms.

Examples of the aliphatic glycol include ethylene glycol, 1,2-propylene glycol, 1,3-propanediol, 1,2-butanediol, 1,3-butanediol, 1,4-butanediol, 1,3-hexanediol, 1,4-hexanediol, 1,6-hexanediol, 2,5-hexanediol, 1,2-octanediol, 1,8-octanediol, 1,10-decanediol, 1,18-octadecanediol, 1,20-eicosanediol, diethylene glycol, triethylene glycol and thiodiethylene glycol.

Examples of the alicyclic glycol include 1-hydroxymethyl-1-cyclobutanol, 1,2-cyclohexanediol, 1,3-cyclohexanediol, 1,4-cyclohexanediol, 1-methyl-3,4-cyclohexanediol, 2-hydroxymethylcyclohexanol, 4-hydroxymethylcyclohexanol, 1,4-cyclohexanedimethanol and 1,1'-dihydroxy-1,1' -dicyclohexyl.

Examples of the aromatic glycol include dihydroxymethylbenzene, 1,4-bis(β-hydroxyethoxy)benzene, 2-phenyl-1,3-propanediol, 2-phenyl-1,4-butanediol, 2-benzyl-1,3-propanediol, triphenylethylene glycol, tetraphenylethylene glycol and benzopinacol.

The divalent phenol here used can be a phenol having 6 to 30 carbon atoms, and examples thereof include

catechol, resorcinol, 1,4-dihydroxybenzene, hydroquinone, bisphenol A, bisphenol F, bisphenol S, dihydroxydiphenyl ether, dihydroxydiphenylthioether, binaphthol, and any alkyl (having 1 to 10 carbon atoms)- or halogen-substituted body thereof.

Examples of the primary monoamine include an aliphatic primary monoamine having 1 to 20 carbon atoms, and examples thereof include methylamine, ethylamine, n-propylamine, isopropylamine, n-butylamine, s-butylamine, isobutylamine, n-amylamine, isoamylamine, n-hexylamine, n-heptylamine, n-octylamine, n-decylamine, n-octadecylamine and n-icosylamine.

Examples of the secondary diamine which can be here used include an aliphatic secondary diamine having 4 to 18 carbon atoms, a heterocyclic secondary diamine having 4 to 13 carbon atoms, an alicyclic secondary diamine having 6 to 14 carbon atoms, an aromatic secondary diamine having 8 to 14 carbon atoms and a secondary dialkanolamine having 3 to 22 carbon atoms.

Examples of the aliphatic secondary diamine include N,N'-dimethylethylenediamine, N,N'-diethylethylenediamine, N,N'-dibutylethylenediamine, N,N'-dimethylpropylenediamine, N,N'-diethylpropylenediamine, N,N'-dibutylpropylenediamine, N,N'-dimethyltetramethylenediamine, N,N'-diethyltetramethylenediamine, N,N'-dibutyltetramethylenediamine, N,N'-dimethylhexamethylenediamine, N,N'-diethylhexamethylenediamine, N,N'-dibutylhexamethylenediamine, N,N'-dimethyldecamethylenediamine, N,N'-diethyldecamethylenediamine and N,N'-dibutyldecamethylenediamine.

Examples of the heterocyclic secondary diamine include piperazine and 1-aminopiperidine.

Examples of the alicyclic secondary diamine include N,N'-dimethyl-1,2-cyclobutanediamine, N,N'-diethyl-1,2-cyclobutanediamine, N,N'-dibutyl-1,2-cyclobutanediamine, N,N'-dimethyl-1,4-cyclohexanediamine, N,N'-diethyl-1,4-cyclohexanediamine, N,N'-dibutyl-1,4-cyclohexanediamine, N,N'-dimethyl-1,3-cyclohexanediamine, N,N'-diethyl-1,3-cyclohexanediamine and N,N'-dibutyl-1,3-cyclohexanediamine.

Examples of the aromatic secondary diamine include N,N'-dimethyl-phenylenediamine, N,N'-dimethyl-xylylenediamine, N,N'-dimethyl-diphenylmethanediamine, N,N'-dimethyl-diphenyl ether diamine, N,N'-dimethyl-benzidine and N,N'-dimethyl-1,4-naphthalenediamine.

Examples of the secondary dialkanolamine include N-methyldiethanolamine, N-octyldiethanolamine, N-stearyl diethanolamine and N-methyldipropanolamine.

The dicarboxylic acid here used can be a dicarboxylic acid having 2 to 20 carbon atoms, and examples include aliphatic dicarboxylic acid, aromatic dicarboxylic acid and alicyclic dicarboxylic acid.

Examples of the aliphatic dicarboxylic acid include oxalic acid, malonic acid, succinic acid, glutaric acid, methylsuccinic acid, dimethylmalonic acid, β-methylglutaric acid, ethylsuccinic acid, isopropylmalonic acid, adipic acid, pimelic acid, suberic acid, azelaic acid, sebacic acid, undecanedioic acid, dodecanedioic acid, tridecanedioic acid, tetradecanedioic acid, hexadecanedioic acid, octadecanedioic acid and eicosanedioic acid.

Examples of the aromatic dicarboxylic acid include terephthalic acid, isophthalic acid, phthalic acid, phenylmalonic acid, homophthalic acid, phenylsuccinic acid, β-phenylglutaric acid, α-phenyladipic acid, β-phenyladipic acid, biphenyl-2,2'-dicarboxylic acid, biphenyl-4,4'-dicarboxylic acid, naphthalenedicarboxylic acid, sodium 3-sulfoisophthalate and potassium 3-sulfoisophthalate.

Examples of the alicyclic dicarboxylic acid include 1,3-cyclopentanedicarboxylic acid, 1,2-cyclopentanedicarboxylic acid, 1,4-cyclohexanedicarboxylic acid, 1,2-cyclohexanedicarboxylic acid, 1,3-cyclohexanedicarboxylic acid, 1,4-cyclohexanediacetic acid, 1,3-cyclohexanediacetic acid, 1,2-cyclohexanediacetic acid and dicyclohexyl-4, 4'-dicarboxylic acid.

Such an active hydrogen atom-containing compound can be used singly or as a mixture of two or more kinds thereof.

In the present invention, the polymeric compound (G) is preferably a polymeric compound (G1) not only having a polyether segment derived from polyethylene glycol (a1) as the polyether segment (A), but also having a polyester segment (D) as the polymer segment (B), the polyester segment (D) being a segment derived from a polyester (d3) obtained from a diol (d1) and a dicarboxylic acid (d2), from the viewpoint of modeling performance, antistatic performance, and colorability.

Examples of the diol (d1) used in the polymeric compound (G1) in the present invention include an aliphatic diol and an aromatic group-containing diol. The diol (d1) may be a mixture of two or more kinds thereof.

Examples of the aliphatic diol include 1,2-ethanediol (ethylene glycol), 1,2-propanediol (propylene glycol), 1,3-propanediol, 1,2-butanediol, 1,3-butanediol, 2-methyl-1,3-propanediol, 1,4-butanediol, 1,5-pentanediol, 2,2-dimethyl-1,3-propanediol (neopentyl glycol), 2,2-diethyl-1,3-propanediol (3,3-dimethylolpentane), 2-n-butyl-2-ethyl-1,3propanediol (3,3-dimethylolheptane), 3-methyl-1,5-pentanediol, 1,6-hexanediol, 2,2,4-trimethyl-1,3-pentanediol, 2-ethyl-1,3-hexanediol, 2-methyl-1,8-octanediol, 1,9-nonanediol, 1,10-decanediol, 1,12-octadecanediol, 1,4-cyclohexanedimethanol, hydrogenated bisphenol A, 1,2-, 1,3- or 1,4-cyclohexanediol, cyclododecanediol, dimer diol, hydrogenated dimer diol, diethylene glycol, dipropylene glycol, and triethylene glycol. Herein, the aliphatic diol preferably has hydrophobicity from the viewpoint of modeling performance, antistatic performance and colorability, and therefore use of polyethylene glycol having hydrophilicity is not preferred.

Examples of the aromatic group-containing diol include bisphenol A, 1,2-hydroxybenzene, 1,3-hydroxybenzene, 1,4-hydroxybenzene, 1,4-benzenedimethanol, an ethylene oxide adduct of bisphenol A, a propylene oxide adduct of bisphenol A, 1,4-bis(2-hydroxyethoxy)benzene, and a polyhydroxyethyl adduct of a mononuclear divalent phenol compound such as resorcine or pyrocatechol.

In particular, the diol (d1) is preferably 1,4-cyclohexanedimethanol, 1,4-butanediol, or ethylene glycol, more preferably at least one selected from 1,4-butanediol and ethylene glycol, still more preferably 1,4-butanediol from the viewpoint of modeling performance, antistatic performance, and colorability.

Examples of the dicarboxylic acid (d2) used in the polymeric compound (G1) in the present invention include an aliphatic dicarboxylic acid and an aromatic dicarboxylic acid. The dicarboxylic acid (d2) may be a mixture of two or more kinds thereof.

The aliphatic dicarboxylic acid used in the polymeric compound (G1) in the present invention may be a derivative (for example, acid anhydride, alkyl ester, alkali metal salt, or acid halide) of the aliphatic dicarboxylic acid. The aliphatic dicarboxylic acid and any derivative thereof may be each a mixture of two or more kinds thereof.

Examples of the aliphatic dicarboxylic acid preferably include an aliphatic dicarboxylic acid having 2 to 20 carbon atoms, and examples thereof include oxalic acid, malonic acid, glutaric acid, methylsuccinic acid, dimethylmalonic acid, 3-methylglutaric acid, ethylsuccinic acid, isopropylmalonic acid, adipic acid, pimelic acid, suberic acid, azelaic acid, sebacic acid, undecanedioic acid, dodecanedioic acid (1,10-decanedicarboxylic acid), tridecanedioic acid, tetradecanedioic acid, hexadecanedioic acid, octadecanedioic acid, eicosanedioic acid, 1,3-cyclopentanedicarboxylic acid, 1,2-cyclopentanedicarboxylic acid, 1,4-cyclohexanedicarboxylic acid, 1,2-cyclohexanedicarboxylic acid, 1,3-cyclohexanedicarboxylic acid, 1,4-cyclohexane diacetic acid, 1,3-cyclohexane diacetic acid, 1,2-cyclohexane diacetic acid, 1,1-cyclohexane diacetic acid, dimer acid, maleic acid, and fumaric acid. Among these aliphatic dicarboxylic acids, succinic acid or adipic acid is preferred and succinic acid is more preferred from the viewpoint of modeling performance, antistatic performance and colorability.

The aromatic dicarboxylic acid used in the polymeric compound (G1) in the present invention may be a derivative (for example, acid anhydride, alkyl ester, alkali metal salt, or acid halide) of the aromatic dicarboxylic acid. The aromatic dicarboxylic acid and any derivative thereof may be each a mixture of two or more kinds thereof.

Examples of the aromatic dicarboxylic acid preferably include an aromatic dicarboxylic acid having 8 to 20 carbon atoms, and examples thereof include terephthalic acid, isophthalic acid, phthalic acid, phenylmalonic acid, homophthalic acid, phenylsuccinic acid, β-phenylglutaric acid, α-phenyladipic acid, β-phenyladipic acid, biphenyl-2,2'-dicarboxylic acid, biphenyl-4,4'-dicarboxylic acid, naphthalenedicarboxylic acid, sodium 3-sulfoisophthalate and potassium 3-sulfoisophthalate. Among these aromatic dicarboxylic acids, terephthalic acid, isophthalic acid, and phthalic acid (encompassing phthalic anhydride) are preferred, and phthalic acid (encompassing phthalic anhydride) is more preferred from the viewpoint of modeling performance, antistatic performance and colorability.

Both the aliphatic dicarboxylic acid and the aromatic dicarboxylic acid are preferably used in combination, as the dicarboxylic acid (d2).

The dicarboxylic acid (d2) is particularly preferably succinic acid, or a dicarboxylic acid mixture containing succinic acid from the viewpoint of modeling performance, antistatic performance, and colorability.

Examples of the dicarboxylic acid usable as the mixture with succinic acid include the above-mentioned aliphatic dicarboxylic acid and aromatic dicarboxylic acid, and these may be used singly or in combination of two or more kinds thereof.

The dicarboxylic acid used in the mixture with succinic acid is preferably the aliphatic dicarboxylic acid, more preferably adipic acid or sebacic acid, most preferably adipic acid from the viewpoint of modeling performance, antistatic performance and colorability.

In a case where the dicarboxylic acid (d2) is a dicarboxylic acid mixture containing succinic acid, the ratio between succinic acid and other dicarboxylic acid (for example, adipic acid) is preferably 100:0 to 50:50, more preferably 100:0 to 70:30, still more preferably 100:0 to 80:20, still more preferably 100:0 to 90:10 on a molar ratio from the viewpoint of modeling performance, antistatic performance and colorability.

In the present invention, the polymeric compound (G1) is preferably one or more kinds of a polymeric compound (G2) obtained by reaction of the polyethylene glycol (a1), the polyester (d3) obtained from the diol (d1) and the dicarboxylic acid (d2), and an epoxy compound (C) having two or more epoxy groups, from the viewpoint of modeling performance, antistatic performance and colorability.

The epoxy compound (C) having two or more epoxy groups used in the polymeric compound (G2) in the present invention is not particularly limited as long as the epoxy compound has two or more epoxy groups, and examples include polyglycidyl ether compounds of mononuclear polyhydric phenol compounds such as hydroquinone, resorcine, pyrocatechol, and phloroglucinol; polyglycidyl ether compounds of polynuclear polyhydric phenol compounds such as dihydroxynaphthalene, biphenol, methylenebisphenol (bisphenol F), methylenebis(ortho-cresol), ethylidenebisphenol, isopropylidenebisphenol (bisphenol A), isopropylidenebis(ortho-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane,

thiobisphenol, sulfobisphenol, oxybisphenol, phenol novolac, ortho-cresol novolac, ethylphenol novolac, butylphenol novolac, octylphenol novolac, resorcine novolac, and terpene phenol; polyglycidyl ethers of polyhydric alcohols such as ethylene glycol, propylene glycol, butylene glycol, hexanediol, diethylene glycol, polyethylene glycol, dipropylene glycol, polypropylene glycol, polyglycol, thiodiglycol, glycerin, trimethylolpropane, pentaerythritol, sorbitol, a bisphenol A-ethylene oxide adduct, and dicyclopentadiene dimethanol; homopolymers or copolymers of glycidyl esters of aliphatic, aromatic or alicyclic polybasic acids such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, endomethylenetetrahydrophthalic acid, and glycidyl methacrylate; glycidylamino group-containing epoxy compounds such as N,N-diglycidylaniline, bis(4-(N-methyl-N-glycidyl amino)phenyl)methane, and diglycidyl orthotoluidine; epoxidized products of cyclic olefin compounds, such as vinyl cyclohexene diepoxide, dicyclopentadiene diepoxide, 3,4-epoxycyclohexylmethyl-3,4-epoxycyclohexanecarboxylate, 3,4-epoxy-6-methylcyclohexylmethyl-6-methylcyclohexanecarboxylate, and bis(3,4-epoxy-6-methylcyclohexylmethyl)adipate; epoxidized conjugated diene polymers such as epoxidized polybutadiene and an epoxidized styrene-butadiene-copolymerized product, heterocyclic compounds such as triglycidyl isocyanurate, and epoxidized soybean oil. Such an epoxy compound may be one in which isocyanate at an end is internally crosslinked by a prepolymer, or one in which the molecular weight is increased with a multivalent active hydrogen compound (polyhydric phenol, polyamine, carbonyl group-containing compound, polyphosphate, or the like). Two or more kinds of such an epoxy compound (C) may be used.

The epoxy compound (C) is preferably bisphenol F diglycidyl ether, dicyclopentadiene dimethanol diglycidyl ether, or hydrogenated bisphenol A diglycidyl ether, more preferably bisphenol F diglycidyl ether from the viewpoint of modeling performance, antistatic performance and colorability.

The epoxy equivalent of the epoxy compound (C) is preferably 70 to 2,000, more preferably 100 to 1,000, still more preferably 150 to 600 from the viewpoint of modeling performance, antistatic performance, and colorability.

In the present invention, the polymeric compound (G2) preferably has a structure which not only has a polyether block (A') constituted from the polyethylene glycol (a1), as the polyether segment (A), but also has a polyester block (D') constituted from the polyester (d3), as the polyester segment (D), and which is obtained by binding via an ester bond or an ether bond formed by reaction of a hydroxyl group at an end of the polyethylene glycol (a1), a hydroxyl group or a carboxyl group at an end of the polyester (d3), and an epoxy group of the epoxy compound (C) or a hydroxyl group formed by reaction of the epoxy group.

Furthermore, the polymeric compound (G2) in the present invention preferably has a structure which is obtained by binding a block polymer (H) having a carboxyl group at each of both ends, the polymer being obtained by alternately binding the polyether block (A') and the polyester block (D') repeatedly via an ester bond, and the epoxy compound (C), via an ester bond formed from a carboxyl group of the block polymer (H) and an epoxy group of the epoxy compound (C), from the viewpoint of modeling performance, antistatic performance and colorability. The polymeric compound (G2) also preferably has a structure obtained by binding via an ester bond formed by reaction of a hydroxyl group formed by ring-opening of an epoxy group in reaction with a carboxyl group, and such a carboxyl group.

The polyethylene glycol (a1) constituting the polyether block (A') in the present invention preferably reacts with the polyester (d3) constituting the polyester block (D'), thereby forming an ester bond and forming the structure of the block polymer (H), and the hydroxyl group at each of both ends may be protected, may be modified, or may be in the form of a precursor.

The polyester (d3) constituting the polyester block (D') in the present invention may be one composed from the diol (d1) and the dicarboxylic acid (d2), and preferably has a structure in which a residue obtained from removing a hydroxyl group of the diol (d1) and a residue obtained from removing a carboxyl group of the dicarboxylic acid (d2) are bound via an ester bond, from the viewpoint of modeling performance, antistatic performance, and colorability.

In addition, the polyester (d3) is preferably one has a structure having a carboxyl group at each of both ends, from the viewpoint of modeling performance, antistatic performance and colorability. Furthermore, the degree of polymerization of the polyester (d3) is suitably in a range of 2 to 50 from the viewpoint of modeling performance, antistatic performance and colorability.

A polyester (d3) having a carboxyl group at each of both ends can be obtained by esterification reaction of the diol (d1) and the dicarboxylic acid (d2).

The dicarboxylic acid (d2) may be any derivative thereof (for example, acid anhydride, ester such as alkyl ester, alkali metal salt, or acid halide), and in a case where the polyester (d3) is obtained with the derivative, both ends may be each finally treated and then formed into a carboxyl group, or the polyester may be directly subjected to the next reaction for obtaining the block polymer (H) having a structure having a carboxyl group at each of both ends.

The ratio of reaction of the dicarboxylic acid (d2) and the diol (d1) is preferably set to allow the dicarboxylic acid (d2) to be excessively used so that both ends are each a carboxyl group, and the dicarboxylic acid (d2) is preferably excessively used by 1 mol on a molar ratio as compared with the diol (d1). A catalyst for promotion of esterification reaction may be used in esterification reaction, and the catalyst here used can be conventionally known one such as dibutyltin

oxide, tetraalkyl titanate, zirconium acetate, or zinc acetate.

In addition, in a case where a derivative such as ester, an alkali metal salt, or acid halide is used instead of the dicarboxylic acid, the derivative may react with the diol and thereafter both ends may be treated, to provide the dicarboxylic acid, or the derivative may be directly subjected to the next reaction for obtaining the block polymer (H) having a structure having a carboxyl group at each of both ends.

A suitable polyester (d3), which is composed of the diol (d1) and the dicarboxylic acid (d2) and which has a carboxyl group at each of both ends, is preferably one which reacts with the polyethylene glycol (a1) to form an ester bond and form a structure of the block polymer (H), and the carboxyl group at each of both ends may be protected, may be modified, or may be in the form of a precursor. An antioxidant such as a phenol-based antioxidant may be added to the reaction system in order to suppress oxidation of a product during reaction.

The block polymer (H) having a structure having a carboxyl group at each of both ends in the polymeric compound (G2) in the present invention has a structure having the polyether block (A') constituted from the polyethylene glycol (a1) and the polyester block (D') constituted from the polyester (d3) having a carboxyl group at each of both ends, these blocks being alternately bound repeatedly via an ester bond formed from a carboxyl group and a hydroxyl group. One example of the block polymer (H) is, for example, one having a structure represented by the following general formula (3).

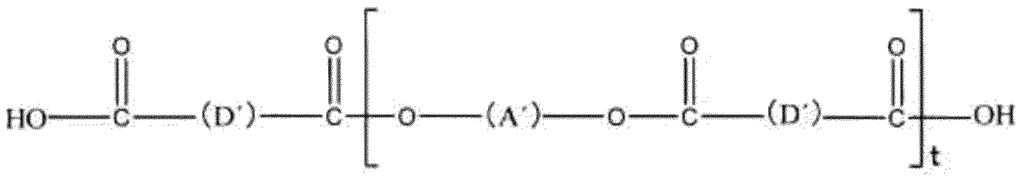

(3)

In the general formula (3), (A') represents a block constituted from the polyethylene glycol (a1), and (D') represents a block constituted from the polyester (d3) having a carboxyl group at each of both ends. In addition, t is the number of repeating units repeated, and preferably represents a number of 1 to 10 from the viewpoint of modeling performance, antistatic performance and colorability. t is more preferably a number of 1 to 7, most preferably a number of 1 to 5.

The block polymer (H) having a structure having a carboxyl group at each of both ends can be obtained by polycondensation reaction of the polyester (d3) having a carboxyl group at each of both ends, and the polyethylene glycol (a1), and is not necessarily needed to be synthesized from the polyester (d3) and the polyethylene glycol (a1) as long as it has an equivalent structure to a structure in which the polyester (d3) and the polyethylene glycol (a1) are alternately bound repeatedly via an ester bond formed from a carboxyl group and a hydroxyl group.

The ratio of reaction of the polyester (d3) and the polyethylene glycol (a1) can be adjusted so that X+1 mol of the polyester (d3) is adopted relative to X mol of the polyethylene glycol (a1), thereby preferably obtaining the block polymer (H) having a carboxyl group at each of both ends.

When the reaction is made, the polyethylene glycol (a1) may be added to the reaction system and directly reacted without isolation of the polyester (d3) after termination of synthesis reaction of the polyester (d3).

A catalyst for promotion of esterification reaction may be used in polycondensation reaction. The catalyst here used can be conventionally known one such as dibutyltin oxide, tetraalkyl titanate, zirconium acetate, or zinc acetate. An antioxidant such as a phenol-based antioxidant may be added to the reaction system in order to suppress oxidation of a product during reaction.

The polymeric compound (G2) in the present invention preferably has a structure obtained by binding the block polymer (H) having a structure having a carboxyl group at each of both ends, and the epoxy compound (C) having two or more epoxy groups, via an ester bond, from the viewpoint of modeling performance, antistatic performance and colorability. The ester bond may be any of an ester bond formed by reaction of a carboxyl group at an end of the block polymer (H) and an epoxy group of the epoxy compound (C), and an ester bond formed by reaction of a hydroxyl group formed by this reaction (reaction of such a carboxyl group and such an epoxy group), and such a carboxyl group, and both of such ester bonds are preferably present from the viewpoint of modeling performance, antistatic performance and colorability.

In addition, the polymeric compound (G2) may further contain an ester bond formed from a carboxyl group of the polyester (d3) and an epoxy group of the epoxy compound (C).

Furthermore, the polymeric compound (G2) may further contain an ester bond formed from a carboxyl group of the polyester (d3), and a hydroxyl group formed by reaction of an epoxy group of the epoxy compound (C).

Furthermore, the polymeric compound (G2) may further contain an ether bond formed from a hydroxyl group of the polyester (d3) or a hydroxyl group of the polyethylene glycol (a1), and an epoxy group of the epoxy compound (C).

In order to obtain a preferred polymeric compound (G2), the block polymer (H) and the epoxy compound (C) may be reacted. In other words, a carboxyl group of the block polymer (H) may be reacted with an epoxy group of the epoxy compound (C). Further preferably, a hydroxyl group formed from the epoxy group reacted and the carboxyl group may be

reacted. The number of epoxy groups in the epoxy compound (C) preferably corresponds to at 0.5 to 5 equivalents, more preferably at 0.5 to 1.5 equivalents based on the number of carboxyl groups in the block polymer (H) to be reacted. The above reaction may be performed in any of various solvents, or in a molten manner.

The epoxy compound (C) having two or more epoxy groups to be reacted is preferably at 0.1 to 2.0 equivalents, more preferably at 0.2 to 1.5 equivalents based on the number of carboxyl groups in the block polymer (H) to be reacted.

When the reaction is made, the epoxy compound (C) may be added to the reaction system and directly reacted without isolation of the block polymer (H) after termination of synthesis reaction of the block polymer (H). In such a case, a carboxyl group of the unreacted polyester (d3) excessively used in synthesis of the block polymer (H) and some epoxy group of the epoxy compound (C) may be reacted to form an ester bond.

A preferred polymeric compound (G2) in the present invention is not necessarily needed to be synthesized from the block polymer (H) and the epoxy compound (C) as long as it has an equivalent structure to a structure in which the block polymer (H) having a structure having a carboxyl group at each of both ends and the epoxy compound (C) having two or more epoxy groups are bound via an ester bond formed from each carboxyl group and each epoxy group. The ester bond formed from each carboxyl group and each epoxy group, here mentioned, also encompasses an ester bond formed from such each carboxyl group and a hydroxyl group formed from such each epoxy group by reaction with such each carboxyl group.

In addition, when the polymeric compound (G2) in the present invention is obtained, the polyester (d3) may be obtained from the diol (d1) and the dicarboxylic acid (d2) and then reacted with the polyethylene glycol (a1) and/or the epoxy compound (C) without isolation of the polyester (d3).

In the present invention, the number average molecular weight of the polyethylene glycol (a1) in the polymeric compound (G1) can be calculated from the hydroxyl value measured, and is preferably 400 to 10,000, more preferably 1,000 to 8,000, further preferably 2,000 to 8,000 from the viewpoint of modeling performance, antistatic performance and colorability. The method for measuring the hydroxyl value and the method for calculating the number average molecular weight from the hydroxyl value are described below.

<Method for calculating number average molecular weight from hydroxyl value>

The hydroxyl value is measured according to the following method for measuring the hydroxyl value, and the number average molecular weight (hereinafter, also referred to as "Mn") is determined according to the following expression.

Number average molecular weight = $(56110 \times 2)$/hydroxyl value

<Method for measuring hydroxyl value>

· Reagent A (acetylating agent)

(1) triethyl phosphate 1560 mL
(2) acetic anhydride 193 mL
(3) perchloric acid (60%) 16 g

The above reagents are mixed in the order of (1) $\rightarrow$ (2) $\rightarrow$ (3).

· Reagent B

Pyridine and pure water are mixed at a volume ratio of 3:1.

· Reagent C

Two to three droplets of a phenolphthalein liquid are added to 500 mL of isopropyl alcohol, and neutralization is made with an aqueous 1 N KOH solution.

First, 2 g of a sample is weighed in a 200-mL conical flask, 10 mL of triethyl phosphate is added thereto, and the resultant is heated and molten. Fifteen mL of the reagent A is added, stoppered, and vigorously shaken. Twenty mL of the reagent B is added, stoppered, and vigorously shaken. Fifty mL of the reagent C is added. Titration with an aqueous 1 N KOH solution is made, and calculation is made according to the following expression.

$$\text{Hydroxyl value [mgKOH/g]} = 56.11 \times f \times (T - B)/S$$

f: Factor of aqueous 1 N KOH solution
B: Amount [mL] of titration in blank test
T: Amount [mL] of titration in main test
S: Amount [g] of sample

In addition, the number average molecular weight of the polyester (d3) in the polymeric compound (G1) in the present invention is preferably 1,000 to 10,000, more preferably 1,500 to 8,000, further preferably 2,500 to 7,500 in terms of polystyrene from the viewpoint of modeling performance, antistatic performance and colorability. A number average molecular weight of less than 1,000 may cause inferior storage stability, and a number average molecular weight of more than 10,000 may cause time-consuming reaction for obtaining the polymeric compound (G1), leading to inferior economic performance, and/or may cause coloration of the resulting polymeric compound due to reaction for a long time.

The method for measuring the number average molecular weight in terms of polystyrene is preferably a gel permeation chromatography (GPC) method. The measurement method is described below.

<Method for measuring number average molecular weight in terms of polystyrene>

The number average molecular weight (Mn) is measured by a GPC method. Measuring conditions of Mn are as follows.

Apparatus: GPC apparatus manufactured by JASCO Corporation
Solvent: chloroform
Standard substance: polystyrene
Detector: differential refractometer (RI detector)
Column stationary phase: Shodex LF-804 manufactured by Showa Denko K.K.
Column temperature: 40°C
Sample concentration: 1 mg/1 mL
Flow rate: 0.8 mL/min.
Amount of injection: 100 μL

Furthermore, the number average molecular weight of the block polymer (H) having a structure having a carboxyl group at each of both ends in the polymeric compound (G2) is preferably 5,000 to 50,000, more preferably 10,000 to 45,000, further preferably 15,000 to 40,000 in terms of polystyrene from the viewpoint of modeling performance, antistatic performance and colorability. A number average molecular weight of less than 5,000 may cause inferior storage stability, and a number average molecular weight of more than 50,000 may cause time-consuming reaction for obtaining the polymeric compound (E), leading to inferior economic performance, and/or may cause coloration of the resulting polymeric compound due to reaction for a long time. The method for measuring the number average molecular weight in terms of polystyrene is preferably a GPC method, and the measurement method is as described above.

Examples of the polymeric compound (G) in the present invention include one having a polyether segment derived from a compound (a) having one or more ethyleneoxy groups and having a hydroxyl group at each of both ends, as the polyether segment (A), and having a polyamide segment (E) derived from polyamide (e), as the polymer segment (B).

The polymeric compound (G) having a polyamide segment (E) derived from polyamide (e), as the polymer segment (B), is preferably a block polymer (G3) having a structure in which the polyamide segment (E) is a polyamide block (E'), a polyether block (A') constituted from a compound (a) having one or more ethyleneoxy groups and having a hydroxyl group at each of both ends is contained as the polyether segment (A), and the polyamide block (E') and the polyether block (A') are repeatedly bound via at least one bond selected from the group consisting of an ester bond, an amide bond, an ether bond, an imide bond and a urethane bond, from the viewpoint of modeling performance, antistatic performance and colorability.

Examples of the polyamide (e) include a ring-opening polymer of lactam, a polycondensate of aminocarboxylic acid, a polycondensate of dicarboxylic acid and diamine, and any copolymerized polyamide thereof.

Examples of the lactam in the ring-opening polymer of lactam, among such amide-forming monomers for polyamide formation, include those each having a number of carbon atoms (hereinafter, sometimes abbreviated as "C") of 6 to 12, for example, caprolactam, enantholactam, laurolactam, and undecanolactam.

Examples of the ring-opening polymer of lactam include nylons 4, -5, -6, -8 and -12.

With respect to the polycondensate of aminocarboxylic acid, examples of the aminocarboxylic acid include C2 to

12 aminocarboxylic acids such as glycine, alanine, valine, leucine, isoleucine, phenylalanine, ω-aminocaproic acid, ω-aminoenanthic acid, ω-aminocaprylic acid, ω-aminopergonic acid, ω-aminocapric acid, 11-aminoundecanoic acid, and 12-aminododecanoic acid.

Examples of the polycondensate of aminocarboxylic acid include nylon 7 resulting from polycondensation of aminoenanthic acid, nylon 11 resulting from polycondensation of ω-aminoundecanoic acid, and nylon 12 resulting from polycondensation of 12-aminododecanoic acid.

With respect to the polycondensate of dicarboxylic acid and diamine, examples of the dicarboxylic acid include an aliphatic dicarboxylic acid, an aromatic (aliphatic) dicarboxylic acid, alicyclic dicarboxylic acid, any amide-forming derivative thereof [acid anhydride, lower (C1 to 4) alkyl ester] and any mixture of two or more kinds thereof.

Examples of the aliphatic dicarboxylic acid include C2 to 20 aliphatic dicarboxylic acids such as succinic acid, glutaric acid, adipic acid, pimelic acid, suberic acid, azelaic acid, sebacic acid, undecanedioic acid, dodecanedioic acid, maleic acid, fumaric acid, and itaconic acid.

Examples of the aromatic (aliphatic) dicarboxylic acid include alkali metal (lithium, sodium, potassium, and the like) salts of C8 to 20 aromatic (aliphatic) dicarboxylic acids such as ortho-, iso- and terephthalic acid, naphthalene-2,6- and -2,7-dicarboxylic acid, diphenyl-4,4'dicarboxylic acid, diphenoxyethanedicarboxylic acid, and 3-sulfoisophthalic acid.

Examples of the alicyclic dicarboxylic acid include C5 to 20 alicyclic dicarboxylic acids such as cyclopropanedicarboxylic acid, 1,3- and 1,4-cyclohexanedicarboxylic acid, cyclohexenedicarboxylic acid, dicyclohexyl-4,4-dicarboxylic acid, and dimer acid.

Among such amide-forming derivatives, examples of the acid anhydride include anhydrides of the dicarboxylic acid, for example, maleic anhydride, itaconic anhydride, and phthalic anhydride, and examples of the lower (C1 to 4) alkyl ester include lower alkyl esters of the dicarboxylic acid, such as dimethyl adipate, and dimethyl ortho-, iso- and terephthalates.

With respect to the polycondensate of dicarboxylic acid and diamine, examples of the diamine include aliphatic diamine, alicyclic diamine, aromatic (aliphatic) diamine and any mixture thereof.

Examples of the aliphatic diamine include C2 to 20 aliphatic diamines such as ethylenediamine, propylenediamine, hexamethylenediamine, heptamethylenediamine, octamethylenediamine, decamethylenediamine, 1,12-dodecanediamine, 1,18-octadecanediamine and 1,20-eicosanediamine.

Examples of the alicyclic diamine include C5 to 20 alicyclic diamines such as 1,3- and 1,4-cyclohexanediamine, isophoronediamine, 4,4'-diaminocyclohexylmethane and 2,2-bis(4-aminocyclohexyl)propane.

Examples of the aromatic (aliphatic) diamine include C6 to 20 aromatic (aliphatic) diamines such as p-phenylenediamine, 2,4- and 2,6-toluylenediamine, 2,2-bis(4,4'-diaminophenyl)propane, 4-aminobenzylamine, xylylenediamine, bis(aminoethyl)benzene, bis(aminopropyl)benzene and bis(aminobutyl)benzene.

Examples of the polycondensate of dicarboxylic acid and diamine include nylon 66, - 610, -69 or -612 resulting from polycondensation of hexamethylenediamine and adipic acid, sebacic acid, azelaic acid or dodecanoic acid, and nylon 46 resulting from polycondensation of tetramethylenediamine and adipic acid.

In addition, examples of the copolymerized polyamide include nylon 6/66 [copolymer of nylon 6 and nylon 66 [copolymerization ratio (weight ratio) = 5/95 to 95/5]] and nylon 6/12 [copolymer of nylon 6 and nylon 12 [copolymerization ratio (polymerization ratio) = 5/95 to 95/5]].

Among the above polyamides (e), a polycondensate of 12-aminododecanoic acid, a polycondensate of adipic acid and hexamethylenediamine, and a ring-opening polymer of caprolactam are preferred, and a ring-opening polymer of caprolactam is further preferred from the viewpoint of modeling performance, antistatic performance, and colorability.

The polyamide (e) is obtained by ring-opening polymerization or polycondensation of the amide-forming monomer by an ordinary method in the presence of one or more kinds of a C4 to 20 dicarboxylic acid and/or the diamine which are/is used as a molecular weight modifier.

Among such dicarboxylic acids each serving as the molecular weight modifier, aliphatic and aromatic dicarboxylic acids and a 3-sulfoisophthalic acid alkali metal salt are preferred, and adipic acid, sebacic acid, terephthalic acid, isophthalic acid and sodium 3-sulfoisophthalate are further preferred, from the viewpoints of reactivity with the amide-forming monomer and antistatic performance. Among such diamines each serving as the molecular weight modifier, hexamethylenediamine and decamethylenediamine are preferred from the viewpoint of reactivity with the amide-forming monomer. Use of the dicarboxylic acid provides a polyamide (e) having a carboxyl group at each of both ends, and use of the diamine provides a polyamide (e) having an amino group at each of both ends.

The amount of the molecular weight modifier used is preferably 2 to 80%, further preferably 4 to 75% based on the total amount of the amide-forming monomer and the molecular weight modifier from the viewpoint of antistatic performance and heat resistance of a modeled body described below.

The number average molecular weight of the polyamide (e), as measured by a GPC method, is preferably 200 to 5,000, further preferably 500 to 3,000 from the viewpoint of heat resistance.

The component (G) in the present invention may be used singly or in combination of two or more kinds thereof.

In the present invention, the polymeric compound (G) is preferably the polymeric compound (G1), the polymeric

compound (G2) and the polymeric compound (G3), more preferably the polymeric compound (G1) and the polymeric compound (G2), particularly preferably the polymeric compound (G2) from the viewpoint of modeling performance, antistatic performance, and colorability.

In the present invention, the amount of the component (G) compounded based on 100 parts by mass of the thermoplastic resin is 3 to 45 parts by mass, and is preferably 4 to 40 parts by mass, more preferably 4 to 34 parts by mass from the viewpoint of modeling performance, antistatic performance, and colorability. In a case where the amount of the component (G) compounded is less than 3 parts by mass, sufficient antistatic performance is not obtained, and in a case where the amount is more than 45 parts by mass, stringing through a nozzle occurs during deposition modeling and/or interlayer adhesion of a modeled body is weakened, not allowing stable modeling to be performed.

The resin composition of the present invention preferably contains one or more selected from the group consisting of an alkali metal salt and an ionic liquid, more preferably contains one or more selected from the group consisting of an alkali metal salt, from the viewpoint of modeling performance, antistatic performance, and colorability.

Examples of the alkali metal salt include any salt of organic acid or inorganic acid, and examples of the alkali metal include lithium, sodium, potassium, cesium, and rubidium. Examples of the organic acid include aliphatic monocarboxylic acids each having 1 to 18 carbon atoms, such as formic acid, acetic acid, propionic acid, butyric acid, and lactic acid; aliphatic dicarboxylic acids each having 1 to 12 carbon atoms, such as oxalic acid, malonic acid, succinic acid, fumaric acid, maleic acid, and adipic acid; aromatic carboxylic acids such as benzoic acid, phthalic acid, isophthalic acid, terephthalic acid, and salicylic acid; and sulfonic acids each having 1 to 20 carbon atoms, such as methanesulfonic acid, p-toluenesulfonic acid, dodecylbenzenesulfonic acid, and trifluoromethanesulfonic acid. Examples of the inorganic acid include hydrochloric acid, hydrobromic acid, sulfuric acid, sulfurous acid, phosphoric acid, phosphorus acid, polyphosphoric acid, nitric acid, and perchloric acid. In particular, a salt of lithium, sodium or potassium is preferred and a salt of sodium is more preferred from the viewpoint of antistatic performance and persistence thereof, thermal stability of a modeled body, and safety to the living body and the environment. A salt of acetic acid, a salt of perchloric acid, a salt of p-toluenesulfonic acid, or a salt of dodecylbenzenesulfonic acid is preferred and a salt of dodecylbenzenesulfonic acid is more preferred from the viewpoint of antistatic performance and persistence thereof, and thermal stability of a modeled body.

Specific examples of the alkali metal salt include lithium acetate, sodium acetate, potassium acetate, lithium chloride, sodium chloride, potassium chloride, lithium phosphate, sodium phosphate, potassium phosphate, lithium sulfate, sodium sulfate, lithium perchlorate, sodium perchlorate, potassium perchlorate, lithium p-toluenesulfonate, sodium p-toluenesulfonate, potassium p-toluenesulfonate, lithium dodecylbenzenesulfonate, sodium dodecylbenzenesulfonate, and potassium dodecylbenzenesulfonate. In particular, lithium p-toluenesulfonate, sodium p-toluenesulfonate, lithium dodecylbenzenesulfonate, sodium dodecylbenzenesulfonate, and the like are preferred and sodium dodecylbenzenesulfonate is most preferred from the viewpoint of antistatic performance and persistence thereof, mechanical properties, and safety to the living body and the environment.

The alkali metal salt may be compounded into the polymeric compound (G) and then compounded into the thermoplastic resin, or may be compounded into the thermoplastic resin separately from the polymeric compound (G), and then used.

The alkali metal salt may be used singly or in combination of two or more kinds thereof, and/or may be used in combination with the ionic liquid.

The amount of the alkali metal salt compounded is preferably 0.005 to 10 parts by mass, more preferably 0.01 to 8 parts by mass, still more preferably 0.05 to 5 parts by mass based on 100 parts by mass of the thermoplastic resin from the viewpoint of modeling performance, antistatic performance, and colorability. In a case where the amount of the alkali metal salt compounded is less than 0.005 parts by mass, sufficient antistatic performance is not obtained, and in a case where the amount is more than 10 parts by mass, the alkali metal salt is bloomed on a modeled body surface during deposition modeling, thereby causing weak interlayer adhesion of a modeled body and not allowing stable modeling to be performed.

Examples of the ionic liquid include a room-temperature molten salt having a melting point equal to or less than room temperature, in which at least one of a cation or an anion constituting the ionic liquid is an organic ion and the initial conductivity is 1 to 200 ms/cm, preferably 10 to 200 ms/cm, for example, a room-temperature molten salt described in WO 95/15572.

Examples of the cation constituting the ionic liquid include a cation selected from the group consisting of amidinium, pyridinium, pyrazolium and guanidinium cations.

In particular, examples of the amidinium cation include the following.

(1) Imidazolinium cation

Examples include cations each having 5 to 15 carbon atoms, such as 1,2,3,4-tetramethylimidazolinium and 1,3-dimethylimidazolinium;

(2) Imidazolium cation

Examples include cations each having 5 to 15 carbon atoms, such as 1,3-dimethylimidazolium and 1-ethyl-3-methylimidazolium;

(3) Tetrahydropyrimidinium cation

Examples include cations each having 6 to 15 carbon atoms, such as 1,3-dimethyl-1,4,5,6-tetrahydropyrimidinium and 1,2,3,4-tetramethyl-1,4,5,6-tetrahydropyrimidinium;

(4) Dihydropyrimidinium cation

Examples include cations each having 6 to 20 carbon atoms, such as 1,3-dimethyl-1,4-dihydropyrimidinium, 1,3-dimethyl-1,6-dihydropyrimidinium, 8-methyl-1,8-diazabicyclo[5,4,0]-7,9-undecadienium, and 8-methyl-1,8-diazabicyclo [5,4,0]-7,10-undecadienium.

Examples of the pyridinium cation include cations each having 6 to 20 carbon atoms, such as 3-methyl-1-propylpyridinium and 1-butyl-3,4-dimethylpyridinium.

Examples of the pyrazolium cation include cations each having 5 to 15 carbon atoms, such as 1, 2-dimethylpyrazolium and 1-n-butyl-2-methylpyrazolium.

Examples of the guanidinium cation include the following.

(1) Guanidinium cation having imidazolinium backbone

Examples include cations each having 8 to 15 carbon atoms, such as 2-dimethylamino-1,3,4-trimethylimidazolinium and 2-diethylamino-1,3,4-trimethylimidazolinium;

(2) Guanidinium cation having imidazolium backbone

Examples include cations each having 8 to 15 carbon atoms, such as 2-dimethylamino-1,3,4-trimethylimidazolium and 2-diethylamino-1,3,4-trimethylimidazolium;

(3) Guanidinium cation having tetrahydropyrimidinium backbone

Examples include cations each having 10 to 20 carbon atoms, such as 2-dimethylamino-1,3,4-trimethyl-1,4,5,6-tetrahydropyrimidinium and 2-diethylamino-1,3-dimethyl-4-ethyl-1,4,5,6-tetrahydropyrimidinium;

(4) Guanidinium cation having dihydropyrimidinium backbone

Examples include cations each having 10 to 20 carbon atoms, such as 2-dimethylamino-1,3,4-trimethyl-1,4-dihydropyrimidinium, 2-dimethylamino-1,3,4-trimethyl-1,6-dihydropyrimidinium, 2-diethylamino-1,3-dimethyl-4-ethyl-1,4-dihydropyrimidinium, and 2-diethylamino-1,3-dimethyl-4-ethyl-1,6-dihydropyrimidinium.

The above cation may be used singly or in combination of two or more kinds thereof. In particular, an amidinium cation is preferred, an imidazolium cation is more preferred, and a 1-ethyl-3-methylimidazolium cation is particularly preferred from the viewpoint of modeling performance, antistatic performance and colorability.

Examples of the organic acid or inorganic acid constituting the anion in the ionic liquid include the following. Examples of the organic acid include carboxylic acid, sulfate, sulfonic acid and phosphate; and examples of the inorganic acid include superstrong acids (for example, fluoroboric acid, tetrafluoroboric acid, perchloric acid, hexafluorophosphoric acid, hexafluoroantimonic acid and hexafluoroarsenic acid), phosphoric acid, and boric acid. Such organic acid and inorganic acid may be each used singly or in combination of two or more kinds thereof.

Among the above organic and inorganic acids, an acid and any mixture thereof, forming a conjugated base of a superstrong acid or an anion other than a conjugated base of a superstrong acid, in which the Hammett acid function ($-H_0$) of the anion constituting the ionic liquid is 12 to 100, are preferred from the viewpoint of antistatic performance and persistence thereof, of the ionic liquid, and thermal stability of a modeled body.

Examples of the anion other than a conjugated base of a superstrong acid include halogen (for example, fluorine, chlorine, and bromine) ions, alkyl (having 1 to 12 carbon atoms) benzenesulfonic acid (for example, p-toluenesulfonic acid and dodecylbenzenesulfonic acid) ions, and poly (n=1 to 25) fluoroalkanesulfonic acid (for example, undecafluoropentanesulfonic acid) ions.

In addition, examples of the superstrong acid include a protonic acid, one derived from a combination of a

protonic acid with a Lewis acid, and any mixture thereof. Examples of the protonic acid as the superstrong acid include bis(trifluoromethylsulfonyl)imidic acid, bis(pentafluoroethylsulfonyl)imidic acid, tris(trifluoromethylsulfonyl)methane, perchloric acid, fluorosulfonic acid, alkane (having 1 to 30 carbon atoms) sulfonic acids (for example, methanesulfonic acid and dodecanesulfonic acid), poly (n=1 to 30) fluoroalkane (having 1 to 30 carbon atoms) sulfonic acids (for example, trifluoromethanesulfonic acid, pentafluoroethanesulfonic acid, heptafluoropropanesulfonic acid, nonafluorobutanesulfonic acid, undecafluoropentanesulfonic acid, and tridecafluorohexanesulfonic acid), fluoroboric acid, and tetrafluoroboric acid. Among them, fluoroboric acid, trifluoromethanesulfonic acid, bis(trifluoromethanesulfonyl)imidic acid, and bis(pentafluoroethylsulfonyl)imidic acid are preferred from the viewpoint of ease of synthesis.

Examples of the protonic acid used in combination with a Lewis acid include hydrogen halides (for example, hydrogen fluoride, hydrogen chloride, hydrogen bromide, and hydrogen iodide), perchloric acid, fluorosulfonic acid, methanesulfonic acid, trifluoromethanesulfonic acid, pentafluoroethanesulfonic acid, nonafluorobutanesulfonic acid, undecafluoropentanesulfonic acid, tridecafluorohexanesulfonic acid, and any mixture thereof. Among them, hydrogen fluoride is preferred from the viewpoint of the initial conductivity of the ionic liquid.

Examples of the Lewis acid include boron trifluoride, phosphorus pentafluoride, antimony pentafluoride, arsenic pentafluoride, tantalum pentafluoride, and any mixture thereof. Among them, boron trifluoride and phosphorus pentafluoride are preferred from the viewpoint of the initial conductivity of the ionic liquid.

While the combination of a protonic acid with a Lewis acid may be any combination, examples of a superstrong acid composed of the combination include tetrafluoroboric acid, hexafluorophosphoric acid, hexafluorotantalic acid, hexafluoroantimonic acid, hexafluorotantalum sulfonic acid, tetrafluoroboric acid, hexafluorophosphoric acid, chlorotrifluoroboric acid, hexafluoroarsenic acid, and any mixture thereof.

Among the above anions, a conjugated base of a superstrong acid (a superstrong acid composed of a protonic acid, and a superstrong acid composed of the combination of a protonic acid with a Lewis acid) is preferred, and a conjugated base of a superstrong acid composed of a protonic acid, and a conjugated base of a protonic acid with a superstrong acid composed of boron trifluoride and/or phosphorus pentafluoride are further preferred from the viewpoint of antistatic performance of the ionic liquid.

Among the above ionic liquids, an ionic liquid having an amidinium cation is preferred, an ionic liquid having a 1-ethyl-3-methylimidazolium cation is more preferred, and 1-ethyl-3-methylimidazoliumbis(trifluoromethanesulfonyl)imide is particularly preferred from the viewpoint of modeling performance, antistatic performance and colorability.

The ionic liquid may be compounded in the polymeric compound (G) and then compounded in the thermoplastic resin, or may be compounded in the thermoplastic resin separately from the polymeric compound (G).

The ionic liquid may be used singly or in combination of two or more kinds thereof, or may also be used in combination with an alkali metal salt.

The amount of the ionic liquid compounded is preferably 0.005 to 10 parts by mass, more preferably 0.01 to 8 parts by mass, most preferably 0.05 to 5 parts by mass based on 100 parts by mass of the thermoplastic resin from the viewpoint of modeling performance, antistatic performance and colorability. In a case where the amount of the ionic liquid compounded is less than 0.005 parts by mass, no sufficient antistatic performance is obtained, and in a case where the amount is more than 10 parts by mass, the ionic liquid is leaked out on a modeled body surface during deposition modeling, thereby causing weak interlayer adhesion of a modeled body and not allowing stable modeling to be performed.

The thermoplastic resin composition of the present invention preferably contains one or more kinds of a colorant from the viewpoint of design properties of a modeled body to be obtained. The colorant can be contained to provide a modeled body which has diverse design properties and which is excellent in design properties.

Examples of the colorant include an inorganic pigment, an organic pigment, a metallic pigment, and a dye.

Examples of the inorganic pigment include titanium oxide, carbon black, titanium yellow, an iron oxide-based pigment, ultramarine, cobalt blue, chromium oxide, spinel green, a lead chromate-based pigment, and a cadmium-based pigment.

Examples of the organic pigment include azo-based pigments such as an azo lake pigment, a benzimidazolone pigment, a diarylide pigment, and a condensed azo pigment, phthalocyanine-based pigments such as phthalocyanine blue and phthalocyanine green, and condensed polycyclic pigments such as an isoindolinone pigment, a quinophthalone pigment, a quinacridone pigment, a perylene pigment, an anthraquinone pigment, a perinone pigment, and dioxazine violet.

Examples of the metallic pigment include a scale-like aluminum metallic pigment, a spherical aluminum pigment used for an improvement in weld external appearance, a mica powder for a pearl tone metallic pigment, and other pigment obtained by covering a polyhedral particle of an inorganic substance such as glass with metal by plating or sputtering.

Examples of the dye include a nitroso dye, a nitro dye, an azo dye, a stilbene azo dye, a ketoimine dye, a triphenylmethane dye, a xanthene dye, an acridine dye, a quinoline dye, a methine/polymethine dye, a thiazole dye, an indamine/indophenol dye, an azine dye, an oxazine dye, a thiazine dye, a sulfide dye, an aminoketone/oxyketone dye, an anthraquinone dye, an indigoid dye, and a phthalocyanine dye.

Such a colorant may be used singly or in combination of two or more kinds thereof.

The amount of the colorant compounded is preferably 0.0005 to 10 parts by mass, more preferably 0.001 to 7 parts by mass, most preferably 0.001 to 5 parts by mass based on 100 parts by mass of the thermoplastic resin from the viewpoint of modeling performance, antistatic performance, and design properties. In a case where the amount of the colorant compounded is less than 0.0005 parts by mass, the variation in color occurs in a modeled body and no excellent design properties are obtained. Even if more than 10 parts by mass of the colorant is compounded, a modeled body is less changed in color tone and other physical properties can be rather adversely affected. The colorant may be directly compounded in the thermoplastic resin, or may be compounded in the form of a masterbatch or composite.

Various additives such as a phenol-based antioxidant, a phosphorus-based antioxidant, a thioether-based antioxidant, an ultraviolet absorber, and/or a hindered amine-based light stabilizer can be, if necessary, further added to the thermoplastic resin composition of the present invention, and the thermoplastic resin composition of the present invention can be thus stabilized.

Examples of the phenol-based antioxidant include 2,6-di-tert-butyl-p-cresol, 2,6-diphenyl-4-octadesiloxyphenol, distearyl(3,5-di-tert-butyl-4-hydroxybenzyl)phosphonate, 1,6-hexamethylenebis[(3,5-di-tert-butyl-4-hydroxyphenyl) propionic acid amide], 4,4'-thiobis(6-tert-butyl-m-cresol), 2,2'-methylenebis(4-methyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-di-tert-butyl-4-hydroxyphenyl)propionate, tetrakis[methyl 3-(3,5-di-tert-butyl-4-hydroxyphenyl)propionate]methane, thiodiethylene glycol bis[(3,5-di-tert-butyl-4-hydroxyphenyl)propionate], 1,6-hexamethylenebis[(3,5-di-tert-butyl-4-hydroxyphenyl)propionate], bis[3,3-bis(4-hydroxy-3-tert-butylphenyl)butyric acid]glycol ester, bis[2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl)propionyloxyethyl]isocyanurate, 3,9-bis[1,1-dimethyl-2- {(3-tert-butyl-4-hydroxy-5-methylphenyl) propionyloxy}ethyl]-2,4,8,10-tetraoxaspiro[5,5]undecane, and triethylene glycol bis[(3-tert-butyl-4-hydroxy-5-methylphenyl)propionate]. The amount of such a phenol-based antioxidant added is preferably 0.001 to 10 parts by mass, more preferably 0.05 to 5 parts by mass based on 100 parts by mass of the thermoplastic resin.

Examples of the phosphorus-based antioxidant include trisnonylphenyl phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl) monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, and phosphite of 2-ethyl-2-butylpropylene glycol and 2,4,6-tri-tert-butylphenol. The amount of such a phosphorus-based antioxidant added is preferably 0.001 to 10 parts by mass, more preferably 0.05 to 5 parts by mass based on 100 parts by mass of the thermoplastic resin.

Examples of the thioether-based antioxidant include dialkyl thiodipropionates such as dilauryl thiodipropionate, dimyristyl thiodipropionate, and distearyl thiodipropionate, and pentaerythritoltetra(P-alkylthiopropionic acid) esters. The amount of such a thioether-based antioxidant added is preferably 0.001 to 10 parts by mass, more preferably 0.05 to 5 parts by mass based on 100 parts by mass of the thermoplastic resin.

Example of the ultraviolet absorber include 2-hydroxybenzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5' -di-tert-butylphenyl)-5-chlorobenzotriazole, 2-(2' -hydroxy-3' -tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-(benzotriazolyl)phenol), and 2-(2' -hydroxy- 3' -tert-butyl- 5' -carboxyphenyl)benzotriazole; benzoates such as phenyl salicylate, resorcinolmonobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-$\alpha$-cyano-$\beta$,$\beta$-diphenyl acrylate and methyl-2-cyano-3-methyl-3-(p-methoxyphenyl)acrylate; and triaryl triazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. The amount of such an ultraviolet absorber added is preferably 0.001 to 30 parts by mass, more preferably 0.05 to 10 parts by mass based on 100 parts by mass of the thermoplastic resin.

Examples of the hindered amine-based light stabilizer include hindered amine compounds such as 2,2,6,6-tetramethyl-4-piperidyl stearate, 1,2,2,6,6-pentamethyl-4-piperidyl stearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-di(tridecyl)-1,2,3,4-butanetetracarboxylate, bis(1,2,2,6,6-pentamethyl-4-piperidyl)-di(tridecyl)-1,2,3,4-butanetetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-yl]aminoundecane, and 1,6,11-tris[2,4-bis(N-butyl-N-(1,2,2,6,6-pentamethyl-4-piperidyl)amino)-s-triazine-6-yl]aminoundecane. The amount of such a hindered amine-based light stabilizer added is preferably 0.001 to 30 parts by mass, more preferably 0.05 to 10 parts by mass based on 100 parts by mass of the thermoplastic resin.

In addition, in a case where a polyolefin-based resin is used as the thermoplastic resin, it is preferable to further add, if necessary, a known neutralizer in order to neutralize a residue catalyst in the polyolefin-based resin, as long as the effects of the present invention are not impaired. Examples of the neutralizer include fatty acid metal salts such as calcium stearate, lithium stearate, and sodium stearate, or fatty acid amide compounds such as ethylenebis(stearamide), ethylenebis(12-hydroxystearamide), and stearic acid amide, and these neutralizers may be mixed and then used.

Other additive(s), for example, a crystal nucleating agent such as a metal aromatic carboxylate, a metal alicyclic alkylcarboxylate, aluminum p-tert-butylbenzoate, a metal aromatic phosphate, or dibenzylidene sorbitol, metal soap, hydrotalcite, a triazine ring-containing compound, a metal hydroxide, a phosphate-based flame retardant, a condensed phosphate-based flame retardant, a phosphate-based flame retardant, an inorganic phosphorus-based flame retardant, a (poly)phosphate-based flame retardant, a halogen-based flame retardant, a silicon-based flame retardant, antimony oxide such as antimony trioxide, other inorganic flame retardant aid, other organic flame retardant aid, a neutralizer, an anti-aging agent, a filler, a pigment, a lubricant, a processing aid, a plasticizer, a reinforcing material, a defoamer, a salt of Group 2 element, a compatibilizing agent, and/or a surfactant may be, if necessary, further added to the thermoplastic resin composition of the present invention, as long as the effects of the present invention are not impaired.

Examples of the triazine ring-containing compound include melamine, ammeline, benzoguanamine, acetoguanamine, phthalodiguanamine, melamine cyanurate, melamine pyrophosphate, butylene diguanamine, norbornene diguanamine, methylene diguanamine, ethylenedimelamine, trimethylenedimelamine, tetramethylenedimelamine, hexamethylenedimelamine, and 1,3-hexylenedimelamine.

Examples of the metal hydroxide include magnesium hydroxide, aluminum hydroxide, calcium hydroxide, barium hydroxide, zinc hydroxide, and KISUMA 5A (magnesium hydroxide: manufactured by Kyowa Chemical Industry Co., Ltd.).

Examples of the phosphate-based flame retardant include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyl diphenyl phosphate, trixylenyl phosphate, octyl diphenyl phosphate, xylenyl diphenyl phosphate, trisisopropyl phenyl phosphate, 2-ethylhexyl diphenyl phosphate, t-butylphenyl diphenyl phosphate, bis-(t-butylphenyl)phenyl phosphate, tris-(t-butylphenyl)phosphate, isopropylphenyl diphenyl phosphate, bis-(isopropylphenyl)diphenyl phosphate, and tris-(isopropylphenyl)phosphate.

Examples of the condensed phosphate-based flame retardant include 1,3-phenylenebis(diphenyl phosphate), 1,3-phenylenebis(dixylenyl phosphate), and bisphenol A bis(diphenyl phosphate).

Examples of the (poly)phosphate-based flame retardant include ammonium salts and amine salts of (poly) phosphoric acids, such as ammonium polyphosphate, melamine polyphosphate, piperazine polyphosphate, melamine pyrophosphate, and piperazine pyrophosphate.

Examples of such other inorganic flame retardant aid include inorganic compounds such as titanium oxide, aluminum oxide, magnesium oxide, hydrotalcite, and montmorillonite, and any surface-treated products thereof, and, for example, various commercially available products such as TIPAQUE R-680 (titanium oxide: manufactured by ISHIHARA SANGYO KAISHA, LTD.), Kyowamag 150 (magnesium oxide: manufactured by Kyowa Chemical Industry Co., Ltd.), DHT-4A (hydrotalcite: manufactured by Kyowa Chemical Industry Co., Ltd.), and ALCAMIZER 4 (zinc-modified hydrotalcite: manufactured by Kyowa Chemical Industry Co., Ltd.) can be used. Examples of such other organic flame retardant aid also include pentaerythritol.

Examples of the crystal nucleating agent include an inorganic crystal nucleating agent and an organic crystal nucleating agent, and specific examples of the inorganic crystal nucleating agent can include kaolinite, synthetic mica, clay, zeolite, silica, graphite, carbon black, magnesium oxide, titanium oxide, calcium sulfide, boron nitride, calcium carbonate, barium sulfate, aluminum oxide, neodymium oxide, and any metal salt of phenyl phosphonate. Such an

inorganic crystal nucleating agent may also be modified with an organic substance in order to enhance dispersibility in the composition.

Specific examples of the organic crystal nucleating agent can include metal organic carboxylates such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanate, calcium octacosanate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β- naphthalate, and sodium cyclohexanecarboxylate, organic sulfonates such as sodium p-toluenesulfonate and sodium sulfoisophthalate, carboxylic acid amides such as stearic acid amide, ethylenebislauric acid amide, palmitic acid amide, hydroxystearic acid amide, erucic acid amide, and trimesic acid tris(t-butylamide), benzylidene sorbitol and any derivative thereof, phosphorus compound metal salts such as sodium-2,2'-methylenebis(4,6-di-t-butylphenyl)phosphate, and 2,2-methylbis(4,6-di-t-butylphenyl)sodium.

The neutralizer is added in order to neutralize a residue catalyst in a synthetic resin, and examples thereof include fatty acid metal salts such as calcium stearate, lithium stearate, and sodium stearate, or fatty acid amide compounds such as ethylenebis(stearamide), ethylenebis(12-hydroxystearamide), and stearic acid amide.

Examples of the lubricant include pure hydrocarbon-based lubricants such as liquid paraffin, natural paraffin, microwax, synthetic paraffin, low-molecular weight polyethylene, and polyethylene wax; halogenated hydrocarbon-based lubricants; fatty acid-based lubricants such as higher fatty acid and oxyfatty acid; fatty acid amide-based lubricants such as fatty acid amide and bisfatty acid amide; ester-based lubricants, for example, lower alcohol ester of fatty acid, polyhydric alcohol ester such as glyceride, polyglycol ester of fatty acid, and fatty alcohol ester (ester wax) of fatty acid; metal soap, fatty alcohol, polyhydric alcohol, polyglycol, polyglycerol, partial ester of fatty acid and polyhydric alcohol, partial ester-based lubricants of fatty acid with polyglycol and polyglycerol, silicone oil, and mineral oil.

Examples of the processing aid include an acrylic processing aid, and the acrylic processing aid can be a polymerized product of one (meth)acrylate, or a copolymerized product of two or more (meth)acrylates. Examples of the (meth)acrylate to be polymerized or copolymerized include (meth)acrylates such as methyl acrylate, methyl methacrylate, ethyl acrylate, ethyl methacrylate, n-propyl acrylate, isopropyl acrylate, n-propyl methacrylate, isopropyl methacrylate, n-butyl acrylate, isobutyl acrylate, t-butyl methacrylate, n-hexyl acrylate, n-hexyl methacrylate, 2-ethylhexyl acrylate, 2-ethylhexyl methacrylate, dodecyl methacrylate, and tridecyl methacrylate. Examples also include, in addition to the above, (meth)acrylic acid, and hydroxy group-containing (meth)acrylate.

Examples of the plasticizer include a polyester-based plasticizer, a glycerin-based plasticizer, a multivalent carboxylate-based plasticizer, a polyalkylene glycol-based plasticizer, an ether ester-based plasticizer, and an epoxy-based plasticizer.

Examples of the reinforcing material include inorganic fibrous reinforcing materials such as a glass fiber, an asbestos fiber, a carbon fiber, a graphite fiber, a metal fiber, a potassium titanate whisker, an aluminum borate whisker, a magnesium-based whisker, a silicon-based whisker, wollastonite, sepiolite, asbestos, a slag fiber, xonotlite, ellestadite, a gypsum fiber, a silica fiber, a silica-alumina fiber, a zirconia fiber, a boron nitride fiber, a silicon nitride fiber and a boron fiber, organic fibrous reinforcing materials such as a polyester fiber, a nylon fiber, an acrylic fiber, a regenerated cellulose fiber, an acetate fiber, kenaf, ramie, cotton, jute, hemp, sisal, flax, linen, silk, Manila hemp, sugarcane, wood pulp, wastepaper, used paper and wool, and plate-like and grained reinforcing materials such as a glass flake, non-swellable mica, graphite, metal foil, ceramic beads, clay, mica, sericite, zeolite, bentonite, dolomite, kaolin, fine powder silicic acid, a feldspar powder, potassium titanate, shirasu ballon, calcium carbonate, magnesium carbonate, barium sulfate, calcium oxide, aluminum oxide, titanium oxide, aluminum silicate, silicon oxide, gypsum, novaculite, dawsonite and white clay. Such a reinforcing material may be coated or bundled with a thermoplastic resin such as an ethylene/vinyl acetate copolymer, or a thermosetting resin such as an epoxy resin, or may be treated with a coupling agent such as aminosilane or epoxysilane.

Examples of the filler include talc, calcium carbonate, a magnesium sulfate fiber, silica, clay, kaolin, alumina, carbon black, and a glass fiber, and such a filler may be treated, for example, micronized or microparticulated, or surface-treated.

Examples of the salt of Group 2 element include any salt of organic acid or inorganic acid, and examples of the Group 2 element include beryllium, magnesium, calcium, strontium, and barium. Examples of the organic acid include aliphatic monocarboxylic acids each having 1 to 18 carbon atoms, such as formic acid, acetic acid, propionic acid, butyric acid and lactic acid; aliphatic dicarboxylic acids each having 1 to 12 carbon atoms, such as oxalic acid, malonic acid, succinic acid, fumaric acid, maleic acid, and adipic acid; aromatic carboxylic acids such as benzoic acid, phthalic acid, isophthalic acid, terephthalic acid, and salicylic acid; and sulfonic acids each having 1 to 20 carbon atoms, such as methanesulfonic acid, p-toluenesulfonic acid, dodecylbenzenesulfonic acid, and trifluoromethanesulfonic acid. Examples of the inorganic acid include hydrochloric acid, hydrobromic acid, sulfuric acid, sulfurous acid, phosphoric acid, phosphorus acid, polyphosphoric acid, nitric acid, and perchloric acid.

Examples of the compatibilizing agent include a modified vinyl polymer having at least one functional group (polar

group) selected from the group consisting of a carboxyl group, an epoxy group, an amino group, a hydroxyl group, and a polyoxyalkylene group, for example, a polymer described in JP H03-258850 A, a modified vinyl polymer having a sunfonyl group, described in JP H06-345927 A, or a block polymer having a polyolefin moiety and an aromatic vinyl polymer moiety.

Examples of the surfactant include a non-ionic, anionic, cationic or amphoteric surfactant. Examples of the non-ionic surfactant include polyethylene glycol-type non-ionic surfactants such as a higher alcohol ethylene oxide adduct, a fatty acid ethylene oxide adduct, a higher alkylamine ethylene oxide adduct, and a polypropylene glycol ethylene oxide adduct; and polyhydric alcohol-type non-ionic surfactants such as polyethylene oxide, fatty acid ester of glycerin, fatty acid ester of pentaerythritol, fatty acid ester of sorbit or sorbitan, polyhydric alcohol alkyl ether, and aliphatic amide of alkanolamine. Examples of the anionic surfactant include carboxylates such as an alkali metal salt of higher fatty acid; sulfates such as higher alcohol sulfate and higher alkyl ether sulfate, and sulfonates such as alkylbenzenesulfonate, alkylsulfonate and paraffin sulfonate; and phosphates such as higher alcohol phosphate. Examples of the cationic surfactant include quaternary ammonium salts such as an alkyltrimethylammonium salt. Examples of the amphoteric surfactant include amino acid-type amphoteric surfactants such as higher alkylaminopropionate, and betaine-type amphoteric surfactants such as higher alkyl dimethyl betaine and higher alkyl dihydroxyethyl betaine.

Other additive(s) usually used in a synthetic resin, such as a crosslinking agent, an anti-fogging agent, a plate-out inhibitor, a surface treatment agent, a fluorescent agent, an antifungal agent, a disinfectant, an antimicrobial agent, a metal deactivator, and/or a release agent can be, if necessary, compounded in the resin composition of the present invention, as long as the effects of the present invention are not impaired.

The resin composition of the present invention can be obtained by mixing, with the thermoplastic resin, the polymeric compound (G), if necessary, one or more selected from the group consisting of an alkali metal salt and an ionic liquid, and furthermore, if necessary, a colorant, and other optional component. Such one or more selected from the group consisting of an alkali metal salt and an ionic liquid, the colorant, and such other optional component may be mixed with the polymeric compound (G) in advance, may be separately mixed in the thermoplastic resin, or may be compounded in the form of a masterbatch or composite.

The method for mixing the above components is not particularly limited, and a known method can be used. Examples include a method involving mixing by a mixing machine such as a tumbler mixer, a Henschel mixer, a ribbon blender, a V-type mixing machine, a W-type mixing machine, a super mixer, or a Nauta mixer, a method involving melt-kneading by an extruder or the like, and a method involving mixing and casting together with a solvent.

The form of the thermoplastic resin composition of the present invention is not particularly limited, may be a thread-like, pellet-like, powdery, granular, or flake-like form, and is preferably a thread-like, pellet-like, or granular form from the viewpoint of handleability.

The shape of the thermoplastic resin composition of the present invention is preferably a continuous thread-like shape. The shape can be a thread-like shape to allow the thermoplastic resin composition to be suitably used as a filament material in a three-dimensional modeling apparatus with a fused deposition modeling system generally sold.

The filament for fused deposition modeling of the present invention is obtained from the resin composition of the present invention. The filament for fused deposition modeling of the present invention has a continuous thread-like shape, and preferably has an average diameter of 1.55 to 1.95 mm, more preferably 1.65 to 1.85 mm, still more preferably 1.70 to 1.80 mm. The filament can have an average diameter in the above range and thus can be suitably used as a filament material in a three-dimensional modeling apparatus with an FDM system generally sold.

Examples of the method for measuring the average diameter include a physical measurement method by a digital caliper and a measurement method by reflection of infrared laser.

The method for producing the filament for fused deposition modeling of the present invention with the resin composition of the present invention is not particularly limited, and a known method can be applied. Examples include a method involving extruding the resin composition of the present invention by an extruder, and cooling the extruded product with water or air and then winding the product by a winder. The filament for fused deposition modeling of the present invention may be stretched or may be unstretched.

Examples of the method for adjusting the average diameter of the filament for fused deposition modeling of the present invention include an appropriate selection of the rate of feeding of a resin material to an extruder, the number of screw rotations of the extruder, the diameter of the die hole of the extruder, the rate of winding of a winder, and the like.

The pellet for fused deposition modeling of the present invention is obtained from the resin composition of the present invention, and can be produced by a known method, as in the filament for fused deposition modeling of the present invention. The pellet for fused deposition modeling of the present invention can be suitably applied to fused deposition modeling, and can also be subjected to production of a modeled body.

The modeled body of the present invention is obtained from the resin composition of the present invention, the filament for fused deposition modeling, or the pellet for fused deposition modeling, by fused deposition modeling. Examples of a modeling apparatus include a three-dimensional modeling apparatus (3D printer) with a fused deposition modeling system, and a commercially available product can be used.

In addition, the method for producing a modeled body of the present invention is a method for producing a

modeled body with any of the resin composition of the present invention, the filament for fused deposition modeling, and the pellet for fused deposition modeling, by fused deposition modeling.

The modeled body of the present invention is excellent in antistatic performance, and thus can be used in various applications. Furthermore, a modeled body obtained from the resin composition of the present invention, to which a colorant is compounded, is preferred because of being a modeled body which not only is excellent in antistatic performance, but also has various designs imparted and is excellent in design properties.

The modeled body of the present invention can be used in a wide range of industrial fields of, for example, electric/electronic/communication, agriculture/forestry/fisheries, mining, construction, foods, fibers, clothing, healthcare, coal, petroleum, rubber, leather, automobiles, railways, aviation, precision equipment, lumber, building materials, civil engineering, furniture, printing, and musical instruments. More specifically, the modeled body is used in applications of, for example, office automation equipment such as printers, personal computers, word processors, keyboards, PDAs (Personal Digital Assistant), telephones, copiers, facsimiles, ECRs (electronic cash registers), electronic calculators, electronic organizers, cards, holders, and stationeries, home appliances such as laundry machines, refrigerators, vacuum cleaners, microwave ovens, lighting instruments, game machines, clothes irons and kotatsu, audiovisual equipment such as TVs, VTRs, video cameras, radio-cassette players, tape recorders, mini discs, CD players, speakers, and liquid crystal displays, and electric/electronic components and communication equipment, such as connectors, relays, capacitors, switches, printed boards, coil bobbins, semiconductor sealing materials, LED sealing materials, electric wires, cables, transformers, deflection yokes, distribution boards, and clocks.

In addition, the modeled body of the present invention is used in various applications of, for example, seats (stuffing, cover materials, and the like), belts, ceiling coverings, convertible tops, armrests, door trims, rear package trays, carpets, mats, sun visors, wheel covers, air-bags, insulating materials, hanging straps, hanging strap belts, wire coating materials, electric insulating materials, paint, coating materials, overlay materials, floor materials, partition walls, carpets, wallpaper, wallpaper materials, exterior materials, interior materials, roof materials, deck materials, wall materials, post materials, bottom boards, fence materials, framing and molding materials, window and door-shaped materials, shingles, building panels, terraces, balconies, soundproof boards, thermal insulating boards, window materials, automobiles, vehicles, railway vehicles, marine vessels, aircrafts, buildings, housing and building materials, civil engineering material, and supplies and sports products, such as clothing materials, curtains, bed sheets, plywood, synthetic fiber boards, tapis, doormats, sheets, buckets, hoses, containers, eye glasses, bags, casings, snow goggles, ski plates, rackets, tents, and musical instruments.

Next, the antistatic agent for fused deposition modeling of the present invention is described.

The antistatic agent for fused deposition modeling of the present invention comprises the polymeric compound (G) having the polyether segment (A) and the polymer segment (B). The antistatic agent for fused deposition modeling of the present invention can be subjected to production of a modeled body by fused deposition modeling.

The antistatic agent for fused deposition modeling of the present invention is preferably used so as to allow one or more kinds of the polymeric compound (G) having the polyether segment (A) and the polymer segment (B) to be at 3 to 45 parts by mass based on 100 parts by mass of the thermoplastic resin. The same thermoplastic resin as that used in the resin composition can be used, and one or more selected from the group consisting of an aromatic polyester, a degradable aliphatic polyester, a polystyrene-based resin, a copolymer of a polystyrene-based resin, an alloy of a polystyrene-based resin and an alloy of a copolymer of a polystyrene-based resin can be suitably used.

The polymeric compound (G) in the antistatic agent for fused deposition modeling of the present invention is the same as described with respect to the resin composition. In the antistatic agent for fused deposition modeling of the present invention, the polymeric compound (G) is preferably a polymeric compound (G1) having a structure which not only has a polyether segment derived from polyethylene glycol (a1), as the polyether segment (A), but also has a polyester segment (D) as the polymer segment (B), the polyester segment (D) being a segment derived from a polyester (d3) obtained from a diol (d1) and a dicarboxylic acid (d2).

In addition, in the antistatic agent for fused deposition modeling of the present invention, preferably, the diol (d1) is at least one selected from 1,4-butanediol and ethylene glycol, and the dicarboxylic acid (d2) is succinic acid, or a dicarboxylic acid mixture containing succinic acid.

Furthermore, in the antistatic agent for fused deposition modeling of the present invention, the polymeric compound (G1) is preferably one or more kinds of a polymeric compound (G2) obtained by reaction of the polyethylene glycol (a1), the polyester (d3) obtained from the diol (d1) and the dicarboxylic acid (d2), and an epoxy compound (C) having two or more epoxy groups.

Furthermore, in the antistatic agent for fused deposition modeling of the present invention, the polymeric compound (G2) has a structure which not only has a polyether block (A') constituted from the polyethylene glycol (a1), as the polyether segment (A), but also has a polyester block (D') constituted from the polyester (d3), as the polyester segment (D), and which is obtained by binding via an ester bond or an ether bond formed by reaction of a hydroxyl group at an end of the polyethylene glycol (a1), a hydroxyl group or a carboxyl group at an end of the polyester (d3), and an epoxy group of the epoxy compound (C) or a hydroxyl group formed by reaction of the epoxy group.

Furthermore, in the antistatic agent for fused deposition modeling of the present invention, the polymeric compound (G2) preferably has a structure which is obtained by binding a block polymer (H) having a carboxyl group at each of both ends, the polymer being obtained by alternately binding the polyether block (A') and the polyester block (D') repeatedly via an ester bond, and the epoxy compound (C), via an ester bond.

Furthermore, in the antistatic agent for fused deposition modeling of the present invention, the polymeric compound (G) is preferably a block polymer (G3) having a structure which not only has a polyether block (A') constituted from a compound (a) having one or more ethyleneoxy groups and having a hydroxyl group at each of both ends, as the polyether segment (A), but also has the polyamide segment (E) as the polymer segment (B), the polyamide segment (E) being a polyamide block (E'), and in which the polyether block (A') and the polyamide block (E') are repeatedly bound via at least one bond selected from the group consisting of an ester bond, an amide bond, an ether bond, an imide bond, and a urethane bond.

Furthermore, in the antistatic agent for fused deposition modeling of the present invention, 0.005 to 10 parts by mass of one or more selected from the group consisting of an alkali metal salt and an ionic liquid are preferably further used in combination based on 100 parts by mass of the thermoplastic resin.

Furthermore, in the antistatic agent for fused deposition modeling of the present invention, 0.0005 to 10 parts by mass of one or more kinds of a colorant are preferably further used in combination based on 100 parts by mass of the thermoplastic resin.

Furthermore, the thermoplastic resin composition for fused deposition modeling, with the antistatic agent for fused deposition modeling of the present invention, can be used as a filament for fused deposition modeling, and in this case, preferably has a thread-like shape having an average diameter of 1.55 to 1.95 mm.

Furthermore, the thermoplastic resin composition for fused deposition modeling, with the antistatic agent for fused deposition modeling of the present invention, can be used as a pellet for fused deposition modeling.

Furthermore, the thermoplastic resin composition for fused deposition modeling, with the antistatic agent for fused deposition modeling of the present invention, can be applied to fused deposition modeling, to obtain a modeled body.

Furthermore, the filament for fused deposition modeling or the pellet for fused deposition modeling, with the antistatic agent for fused deposition modeling of the present invention, can be applied to fused deposition modeling, to obtain a modeled body.

Furthermore, the thermoplastic resin composition for fused deposition modeling, the filament for fused deposition modeling, and the pellet for fused deposition modeling, with the antistatic agent for fused deposition modeling of the present invention, can be subjected to a method for producing a modeled body, involving producing a modeled body with any of the thermoplastic resin composition, the filament, and the pellet, by fused deposition modeling.

Next, use as an antistatic agent for fused deposition modeling of the present invention is described.

The use as an antistatic agent for fused deposition modeling of the present invention is use of an agent containing the polymeric compound (G) having the polyether segment (A) and the polymer segment (B). The use as an antistatic agent for fused deposition modeling of the present invention can be applied to production of a modeled body by fused deposition modeling.

In the use as an antistatic agent for fused deposition modeling of the present invention, the amount of one or more kinds of the polymeric compound (G) having the polyether segment (A) and the polymer segment (B) is preferably an amount of 3 to 45 parts by mass based on 100 parts by mass of the thermoplastic resin. The thermoplastic resin here used can be the same as that used in the resin composition, and one or more selected from the group consisting of an aromatic polyester, a degradable aliphatic polyester, a polystyrene-based resin, a copolymer of a polystyrene-based resin, an alloy of a polystyrene-based resin and an alloy of a copolymer of a polystyrene-based resin can be suitably used.

The polymeric compound (G) in the use as an antistatic agent for fused deposition modeling of the present invention is the same as described with respect to the resin composition. In the use as an antistatic agent for fused deposition modeling of the present invention, the polymeric compound (G) is preferably a polymeric compound (G1) having a structure which not only has a polyether segment derived from polyethylene glycol (a1), as the polyether segment (A), but also has a polyester segment (D) as the polymer segment (B), the polyester segment (D) being a segment derived from a polyester (d3) obtained from a diol (d1) and a dicarboxylic acid (d2).

In addition, in the use as an antistatic agent for fused deposition modeling of the present invention, preferably, the diol (d1) is at least one selected from 1,4-butanediol and ethylene glycol, and the dicarboxylic acid (d2) is succinic acid, or a dicarboxylic acid mixture containing succinic acid.

Furthermore, in the use as an antistatic agent for fused deposition modeling of the present invention, the polymeric compound (G1) is preferably one or more kinds of a polymeric compound (G2) obtained by reaction of the polyethylene glycol (a1), the polyester (d3) obtained from the diol (d1) and the dicarboxylic acid (d2), and an epoxy compound (C) having two or more epoxy groups.

Furthermore, in the use as an antistatic agent for fused deposition modeling of the present invention, the polymeric compound (G2) preferably has a structure which not only has a polyether block (A') constituted from the polyethylene glycol (a1), as the polyether segment (A), but also has a polyester block (D') constituted from the polyester

(d3), as the polyester segment (D), and which is obtained by binding via an ester bond or an ether bond formed by reaction of a hydroxyl group at an end of the polyethylene glycol (a1), a hydroxyl group or a carboxyl group at an end of the polyester (d3), and an epoxy group of the epoxy compound (C) or a hydroxyl group formed by reaction of the epoxy group.

Furthermore, in the use as an antistatic agent for fused deposition modeling of the present invention, the polymeric compound (G2) preferably has a structure which is obtained by binding a block polymer (H) having a carboxyl group at each of both ends, the polymer being obtained by alternately binding the polyether block (A') and the polyester block (D') repeatedly via an ester bond, and the epoxy compound (C), via an ester bond.

Furthermore, in the use as an antistatic agent for fused deposition modeling of the present invention, the polymeric compound (G) is preferably a block polymer (G3) having a structure which not only has a polyether block (A') constituted from a compound (a) having one or more ethyleneoxy groups and having a hydroxyl group at each of both ends, as the polyether segment (A), but also has the polyamide segment (E) as the polymer segment (B), the polyamide segment (E) being a polyamide block (E'), and in which the polyether block (A') and the polyamide block (E') are repeatedly bound via at least one bond selected from the group consisting of an ester bond, an amide bond, an ether bond, an imide bond, and a urethane bond.

Furthermore, in the use as an antistatic agent for fused deposition modeling of the present invention, 0.005 to 10 parts by mass of one or more selected from the group consisting of an alkali metal salt and an ionic liquid are preferably further used in combination based on 100 parts by mass of the thermoplastic resin.

Furthermore, in the use as an antistatic agent for fused deposition modeling of the present invention, 0.0005 to 10 parts by mass of one or more kinds of a colorant are preferably further used in combination based on 100 parts by mass of the thermoplastic resin.

Furthermore, in the use as an antistatic agent for fused deposition modeling of the present invention, the resulting thermoplastic resin composition for fused deposition modeling can be used as a filament for fused deposition modeling, and in this case, preferably has a thread-like shape having an average diameter of 1.55 to 1.95 mm.

Furthermore, in the use as an antistatic agent for fused deposition modeling of the present invention, the resulting thermoplastic resin composition for fused deposition modeling can be used as a pellet for fused deposition modeling.

Furthermore, in the use as an antistatic agent for fused deposition modeling of the present invention, the resulting thermoplastic resin composition for fused deposition modeling can be applied to fused deposition modeling to obtain a modeled body.

Furthermore, in the use as an antistatic agent for fused deposition modeling of the present invention, the resulting filament for fused deposition modeling or the resulting pellet for fused deposition modeling can be applied to fused deposition modeling to obtain a modeled body.

Furthermore, the use as an antistatic agent for fused deposition modeling of the present invention can be subjected to a method for producing a modeled body, comprising producing a modeled body with any of the resulting thermoplastic resin composition for fused deposition modeling, filament for fused deposition modeling, and pellet for fused deposition modeling, by fused deposition modeling.

Next, the method for use as an antistatic agent for fused deposition modeling of the present invention is described.

The method for use as an antistatic agent for fused deposition modeling of the present invention is a method for using the agent containing the polymeric compound (G) having the polyether segment (A) and the polymer segment (B), as an antistatic agent for fused deposition modeling. The method for use as an antistatic agent for fused deposition modeling of the present invention can be subjected to production of a modeled body by fused deposition modeling.

In the method for use as an antistatic agent for fused deposition modeling of the present invention, the amount of one or more kinds of the polymeric compound (G) having the polyether segment (A) and the polymer segment (B) is preferably an amount of 3 to 45 parts by mass based on 100 parts by mass of the thermoplastic resin. The thermoplastic resin here used can be the same as that used in the resin composition, and one or more selected from the group consisting of an aromatic polyester, a degradable aliphatic polyester, a polystyrene-based resin, a copolymer of a polystyrene-based resin, an alloy of a polystyrene-based resin and an alloy of a copolymer of a polystyrene-based resin can be suitably used.

The polymeric compound (G) in the method for use as an antistatic agent for fused deposition modeling of the present invention is the same as described with respect to the resin composition. In the method for use as an antistatic agent for fused deposition modeling of the present invention, the polymeric compound (G) is preferably a polymeric compound (G1) having a structure which not only has a polyether segment derived from polyethylene glycol (a1), as the polyether segment (A), but also has a polyester segment (D) as the polymer segment (B), the polyester segment (D) being a segment derived from a polyester (d3) obtained from a diol (d1) and a dicarboxylic acid (d2).

In addition, in the method for use as an antistatic agent for fused deposition modeling of the present invention, preferably, the diol (d1) is at least one selected from 1,4-butanediol and ethylene glycol, and the dicarboxylic acid (d2) is succinic acid, or a dicarboxylic acid mixture containing succinic acid.

Furthermore, in the method for use as an antistatic agent for fused deposition modeling of the present invention, the polymeric compound (G1) is preferably one or more kinds of a polymeric compound (G2) obtained by reaction of the

polyethylene glycol (a1), the polyester (d3) obtained from the diol (d1) and the dicarboxylic acid (d2), and an epoxy compound (C) having two or more epoxy groups.

Furthermore, in the method for use as an antistatic agent for fused deposition modeling of the present invention, the polymeric compound (G2) preferably has a structure which not only has a polyether block (A') constituted from the polyethylene glycol (a1), as the polyether segment (A), but also has a polyester block (D') constituted from the polyester (d3), as the polyester segment (D), and which is obtained by binding via an ester bond or an ether bond formed by reaction of a hydroxyl group at an end of the polyethylene glycol (a1), a hydroxyl group or a carboxyl group at an end of the polyester (d3), and an epoxy group of the epoxy compound (C) or a hydroxyl group formed by reaction of the epoxy group.

Furthermore, in the method for use as an antistatic agent for fused deposition modeling of the present invention, the polymeric compound (G2) preferably has a structure which is obtained by binding a block polymer (H) having a carboxyl group at each of both ends, the polymer being obtained by alternately binding the polyether block (A') and the polyester block (D') repeatedly via an ester bond, and the epoxy compound (C), via an ester bond.

Furthermore, in the method for use as an antistatic agent for fused deposition modeling of the present invention, the polymeric compound (G) is preferably a block polymer (G3) having a structure which not only has a polyether block (A') constituted from a compound (a) having one or more ethyleneoxy groups and having a hydroxyl group at each of both ends, as the polyether segment (A), but also has the polyamide segment (E) as the polymer segment (B), the polyamide segment (E) being a polyamide block (E'), and in which the polyether block (A') and the polyamide block (E') are repeatedly bound via at least one bond selected from the group consisting of an ester bond, an amide bond, an ether bond, an imide bond and a urethane bond.

Furthermore, in the method for use as an antistatic agent for fused deposition modeling of the present invention, 0.005 to 10 parts by mass of one or more selected from the group consisting of an alkali metal salt and an ionic liquid are preferably further used in combination based on 100 parts by mass of the thermoplastic resin.

Furthermore, in the method for use as an antistatic agent for fused deposition modeling of the present invention, 0.0005 to 10 parts by mass of one or more kinds of a colorant are preferably further used in combination based on 100 parts by mass of the thermoplastic resin.

Furthermore, in the method for use as an antistatic agent for fused deposition modeling of the present invention, the resulting thermoplastic resin composition for fused deposition modeling can be used as a filament for fused deposition modeling, and in this case, preferably has a thread-like shape having an average diameter of 1.55 to 1.95 mm.

Furthermore, in the method for use as an antistatic agent for fused deposition modeling of the present invention, the resulting thermoplastic resin composition for fused deposition modeling can be used as a pellet for fused deposition modeling.

Furthermore, in the method for use as an antistatic agent for fused deposition modeling of the present invention, the resulting thermoplastic resin composition for fused deposition modeling can be applied to fused deposition modeling to obtain a modeled body.

Furthermore, in the method for use as an antistatic agent for fused deposition modeling of the present invention, the resulting filament for fused deposition modeling or the resulting pellet for fused deposition modeling can be applied to fused deposition modeling to obtain a modeled body.

Furthermore, the method for use as an antistatic agent for fused deposition modeling of the present invention can be subjected to a method for producing a modeled body, comprising producing a modeled body with any of the resulting thermoplastic resin composition for fused deposition modeling, filament for fused deposition modeling, and pellet for fused deposition modeling, by fused deposition modeling.

## EXAMPLES

Hereinafter, the present invention is described in more detail with reference to Examples, but the present invention is not limited thereto. In the following Examples, "%", "ppm", and "part(s)" are each on a mass basis, unless particularly noted.

The polymeric compound (G) was produced according to the following Production Examples.

In the following Production Examples, the number average molecular weight of the compound (a) was calculated according to the following <Method for calculating number average molecular weight from hydroxyl value>, and the number average molecular weight of any other than the compound (a) was calculated according to the following <Method for measuring number average molecular weight in terms of polystyrene>.

### <Method for calculating number average molecular weight from hydroxyl value>

The hydroxyl value was measured according to the following method for measuring the hydroxyl value, and the number average molecular weight was determined according to the following expression.

Number average molecular weight = $(56110 \times 2)/\text{hydroxyl value}$

<Method for measuring hydroxyl value>

· Reagent A (acetylating agent)

(1) triethyl phosphate 1560 mL
(2) acetic anhydride 193 mL
(3) perchloric acid (60%) 16 g

The above reagents are mixed in the order of (1) → (2) → (3).

· Reagent B

Pyridine and pure water are mixed at a volume ratio of 3:1.

· Reagent C

Two to three droplets of a phenolphthalein liquid are added to 500 mL of isopropyl alcohol, and neutralization is made with an aqueous 1 N KOH solution.

First, 2 g of a sample is weighed in a 200-mL conical flask, 10 mL of triethyl phosphate is added thereto, and the resultant is heated and molten. Fifteen mL of the reagent A is added, stoppered, and vigorously shaken. Twenty mL of the reagent B is added, stoppered, and vigorously shaken. Fifty mL of the reagent C is added. Titration with an aqueous 1 N KOH solution is made, and calculation is made according to the following expression.

$$\text{Hydroxyl value [mgKOH/g]} = 56.11 \times f \times (T - B)/S$$

f: Factor of aqueous 1 N KOH solution
B: Amount [mL] of titration in blank test
T: Amount [mL] of titration in main test
S: Amount [g] of sample

<Method for measuring number average molecular weight in terms of polystyrene>

The number average molecular weight Mn was measured by a GPC method. Measuring conditions of Mn are as follows.

Apparatus: GPC apparatus manufactured by JASCO Corporation
Solvent: chloroform
Standard substance: polystyrene
Detector: differential refractometer (RI detector)
Column stationary phase: Shodex LF-804 manufactured by Showa Denko K.K.
Column temperature: 40°C
Sample concentration: 1 mg/1 mL
Flow rate: 0.8 mL/min.
Amount of injection: 100 μL

[Production Example 1] Production of polymeric compound (G2)-1

A polyester (d3)-1 was obtained by polymerizing 122 g (1.35 mol) of 1,4-butanediol (d1)-1 and 168 g (1.42 mol) of succinic acid (d2)-1 in the presence of 0.2 g of an antioxidant (tetrakis[3-(3,5-di-tert-butyl-4-hydroxyphenyl)propionyloxymethyl]methane, ADEKA STAB AO-60, manufactured by ADEKA CORPORATION) in a separable flask at normal pressure with a gradual temperature rise from 140°C to 190°C for 3 hours. The obtained polyester (d3)-1 had a number average molecular weight Mn of 3,000.

Next, 400 g of a block polymer (H)-1 having a structure having a carboxyl group at each of both ends was obtained by loading 250 g of the obtained polyester (d3)-1, 160 g of polyethylene glycol (a1)-1 having a number average molecular weight of 3,300, as the compound (a) having one or more ethyleneoxy groups and having a hydroxyl group at each of both

ends, 0.2 g of an antioxidant (ADEKA STAB AO-60), and 0.4 g of zirconium octylate, and performing polymerization under reduced pressure at 200°C for 3 hours. The block polymer (H)-1 having a structure having a carboxyl group at each of both ends had a number average molecular weight Mn of 16,500.

A polymeric compound (G2)-1 was obtained by loading 3 g of bisphenol F diglycidyl ether (epoxy equivalent 170 g/eq) as an epoxy compound (C)-1 having two or more epoxy groups, to 400 g of the obtained block polymer (H)-1 having a structure having a carboxyl group at each of both ends, and performing polymerization under reduced pressure at 220°C 5 hours.

[Production Example 2] Production of polymeric compound (G2)-2

A polyester (d3)-2 obtained by loading 656 g of 1,4-cyclohexanedimethanol (d1)-2, 708 g of adipic acid (d2)-2, 0.7 g of phthalic anhydride (d2)-3, and 0.7g of an antioxidant (tetrakis[3-(3,5-di-tert-butyl-4-hydroxyphenyl)propionyloxymethyl]methane, ADEKA STAB AO-60, manufactured by ADEKA CORPORATION) to a separable flask, and performing polymerization at normal pressure with a gradual temperature rise from 160°C to 210°C for 4 hours and then under reduced pressure at 210°C for 3 hours. The obtained polyester (d3)-2 had a number average molecular weight Mn of 5,400.

Next, a block polymer (H)-2 having a structure having a carboxyl group at each of both ends was obtained by loading 600 g of the obtained polyester (d3)-2, 300 g of polyethylene glycol (a1)-2 having a number average molecular weight of 4,000, as the compound (a) having one or more ethyleneoxy groups and having a hydroxyl group at each of both ends, 0.5 g of an antioxidant (ADEKA STAB AO-60), and 0.8 g of zirconium octylate, and performing polymerization at under reduced pressure 210°C for 7 hours. The block polymer (H)-2 having a structure having a carboxyl group at each of both ends had a number average molecular weight Mn of 12,000.

A polymeric compound (G2)-2 was obtained by loading 6 g of bisphenol F diglycidyl ether (epoxy equivalent 170 g/eq) as the epoxy compound (C)-1, to 360 g of the obtained block polymer (H)-2 having a structure having a carboxyl group at each of both ends, and performing polymerization under reduced pressure at 240°C for 3 hours.

[Production Example 3] Production of polymeric compound (G3)-1

A polyamide (e)-1 having a carboxyl group at each of both ends was obtained as the polyamide (e) by charging a stainless pressure-resistant reaction container with 173 parts of ε-caprolactam, 33.2 parts of terephthalic acid, 0.4 parts of an antioxidant (tetrakis[3-(3,5-di-tert-butyl-4-hydroxyphenyl)propionyloxymethyl]methane, ADEKA STAB AO-60, manufactured by ADEKA CORPORATION) and 10 parts of water, purging the content with nitrogen, thereafter raising the temperature to 220°C with stirring under tight sealing, and stirring the resultant at that temperature (pressure: 0.2 to 0.3 MPa) for 4 hours. The (e)-1 had an acid value of 111 and a Mn of 1,000.

Next, a polymeric compound (G3)-1 was obtained by loading 780 parts of an EO adduct (a)-4 of bisphenol A, having a number average molecular weight of 4,000, as the compound (a) having one or more ethyleneoxy groups and having a hydroxyl group at each of both ends, and 0.6 parts of zirconyl acetate, to 199 parts of the obtained polyamide (e)-1, raising the temperature to 240°C with stirring, and performing polymerization under reduced pressure (0.013 MPa or less) at that temperature for 6 hours.

[Production Example 4] Production of polymeric compound (G3)-2

A polyamide (e)-2 having a carboxyl group at each of both ends was obtained as the polyamide (e) by charging a stainless pressure-resistant reaction container with 150 parts of laurolactam, 11.8 parts of adipic acid, 0.4 parts of an antioxidant (tetrakis[3-(3,5-di-tert-butyl-4-hydroxyphenyl)propionyloxymethyl]methane, ADEKA STAB AO-60, manufactured by ADEKA CORPORATION) and 11.3 parts of water, purging the content with nitrogen, thereafter raising the temperature to 280°C, with stirring under tight sealing, and stirring the resultant at that temperature for 3 hours. The (e)-2 had an acid value of 55 and a number average molecular weight of 2,000.

Next, a polymeric compound (G3)-2 was obtained by loading 60 parts of polyethylene glycol (a1)-3 having a number average molecular weight of 1,500, as the compound (a) having one or more ethyleneoxy groups and having a hydroxyl group at each of both ends, and 0.4 parts of tetrabutoxyzirconium, to 60 parts of the obtained polyamide (e)-2, raising the temperature to 240°C with stirring, and performing polymerization under reduced pressure (0.2 kPa or less) at that temperature for 6 hours.

[Examples 1 to 49 and Comparative Examples 1 to 35]

<Production of thermoplastic resin composition>

Each thread-like thermoplastic resin composition (hereinafter, also referred to as "filament") was produced by dry blending each thermoplastic resin composition described in the Tables, and then melt-kneading it with a uniaxial extruder (apparatus name: D3038, manufactured by Toyo Seiki Seisaku-sho, Ltd.). Melt-kneading conditions in the uniaxial extruder were set with respect to the thermoplastic resin compositions described in Tables 1 to 10 so that the extrusion temperature was 230°C and the rate of screw rotation was 25 rpm, and the conditions were set with respect to the thermoplastic resin compositions described in Tables 11 to 14 so that the extrusion temperature was 160°C and the rate of screw rotation was 25 rpm. A filament for fused deposition modeling was obtained by cooling a filament discharged from the extruder, with water, and at the same time winding the filament by a filament winder (apparatus name: skein winder, manufactured by Nippon Placon Co., Ltd.) equipped with a length measuring machine (apparatus name: Filameasure, manufactured by Filabot) so that the average diameter was 1.65 to 1.85 mm. The filament was wound around a filament reel and then dried under reduced pressure at 80°C. All the amounts of compounding, shown in the Tables, are here based on part(s) by mass.

In addition, an ABS resin (CarbonX ABS+CF manufactured by 3DXTECH) with 15% by mass of a carbon fiber compounded was used as a comparative thermoplastic resin composition.

<Production of test piece for evaluation>

A test piece of 100 mm × 100 mm × 3 mm was obtained by attaching the reel around which the filament obtained above was wound, to a 3D printer (Funmat HT Enhanced manufactured by Intamsys), and performing modeling with a FDM system under the following conditions. The modeling performance was evaluated by the following

<Modeling performance evaluation>.

Furthermore, the colorability was evaluated by the following <Colorability evaluation>, and the antistatic performance was evaluated by the following <Measurement and evaluation of surface resistivity (SR value)>.

Deposition modeling conditions of thermoplastic resin composition with ABS resin as thermoplastic resin:

Nozzle temperature: 260°C
Stage temperature: 90°C
Chamber temperature: 40°C
Nozzle diameter: 0.4 mm
Deposition pitch: 0.2 mm
Filling ratio: 99% or more (solid)
Support material: raft
Raster orientation: 45°/-45°
Deposition direction: X-Y (Flat)

Deposition modeling conditions of thermoplastic resin composition with polycarbonate/ABS resin alloy as thermoplastic resin:

Nozzle temperature: 300°C
Stage temperature: 100°C
Chamber temperature: 50°C
Nozzle diameter: 0.4 mm
Deposition pitch: 0.2 mm
Filling ratio: 99% or more (solid)
Support material: raft
Raster orientation: 45°/-45°
Deposition direction: X-Y (Flat)

Deposition modeling conditions of thermoplastic resin composition with PLA resin as thermoplastic resin:

Nozzle temperature: 210°C
Stage temperature: 30°C

Chamber temperature: 25°C
Nozzle diameter: 0.4 mm
Deposition pitch: 0.2 mm
Filling ratio: 99% or more (solid)
Support material: none
Raster orientation: 45°/-45°
Deposition direction: X-Y (Flat)

<Modeling performance evaluation>

The modeling performance was evaluated during test piece modeling by the 3D printer, according to the following evaluation criteria. Good: test piece obtained without any problems, and excellent modeling performance. Poor: inferior modeling performance, for example, observation of bleeding and/or stringing from nozzle during modeling, and/or no test piece producible due to poor interlayer adhesiveness between resins.

<Colorability evaluation>

The obtained test piece was visually confirmed, and the state of coloration was evaluated according to the following evaluation criteria.

Good: excellent colorability with pigment compounded.
Poor: inferior colorability with pigment compounded.

<Measurement and evaluation of surface resistivity (SR value)>

Each of the test pieces obtained was stored in conditions of a temperature of 25°C and a humidity of 50% RH, immediately after modeling, and the surface resistivity (Ω/□) thereof was measured after 1 day of the modeling, under the same atmosphere in conditions of an application voltage of 500 V and an application period of 1 minute by use of an R8340 resistance meter manufactured by Advantest Corporation. The measurement was performed five times with respect to each of the test pieces, and the average value was determined.
As the numerical value of the surface resistivity (SR value) is smaller, the antistatic performance is more excellent. One having a surface resistivity of $1 \times 10^{14}$ or more was rated to have antistatic performance allowing for no practical use.
These results are shown together in the Tables. The materials used in the Tables are as follows.

ABS resin (1): TECHNO ABS 170 manufactured by Techno-UMG Co., Ltd.
ABS resin (2): SANTAC AT-05 manufactured by NIPPON A&L INC.
PC resin (1): Iupilon S-3000F manufactured by Mitsubishi Engineering-Plastics Corporation
PLA resin (1): Ingeo 2003D manufactured by NatureWorks LLC
NaDBS: sodium dodecylbenzenesulfonate
LiOTs: lithium p-toluenesulfonate
ImDBS: 1-ethyl-3-methylimidazolium-dodecylbenzenesulfonate
ImES: 1-ethyl-3-methylimidazofium-ethylsulfate
ABS resin with 15% by mass of carbon fiber compounded: CarbonX ABS+CF manufactured by 3DXTECH

[Table 1]

| | | Example 1 | Example 2 | Example 3 | Example 4 | Example 5 | Example 6 | Example 7 |
|---|---|---|---|---|---|---|---|---|
| Thermoplastic resin | ABS resin (1) | 100 | 100 | 100 | 100 | 100 | 100 | 100 |
| | ABS resin (2) | | | | | | | |
| | PC resin (1) | | | | | | | |
| Polymeric compound (G2)-1 | | 4 | 7 | 10 | 10 | 10 | 10 | 10 |
| Polymeric compound (G2)-2 | | | | | | | | |
| Polymeric compound (G3)-1 | | | | | | | | |
| Polymeric compound (G3)-2 | | | | | | | | |
| Alkali metal salt NaDBS | | 0.4 | 0.7 | | 1 | | 1 | 1 |
| Alkali metal salt LiOTs | | | | | | 1 | | |
| Ionic liquid ImDBS | | | | | | | | |
| Ionic liquid ImES | | | | | | | | |
| Colorant | Phthalocyanine green | | | | | | 0.3 | |
| | Ultramarine blue | | | | | | | 0.3 |
| Modeling performance | | Good | Good | Good | Good | Good | Good | Good |
| Colorability | | - | - | - | - | - | Good | Good |
| SR | | $7 \times 10^{12}$ | $1 \times 10^{11}$ | $4 \times 10^{11}$ | $3 \times 10^{10}$ | $1 \times 10^{10}$ | $3 \times 10^{10}$ | $3 \times 10^{10}$ |

[Table 2]

| | | Example 8 | Example 9 | Example 10 | Example 11 | Example 12 | Example 13 | Example 14 |
|---|---|---|---|---|---|---|---|---|
| Thermoplastic resin | ABS resin (1) | 100 | 100 | 100 | 100 | 100 | 100 | 100 |
| | ABS resin (2) | | | | | | | |
| | PC resin (1) | | | | | | | |
| Polymeric compound (G2)-1 | | 10 | 10 | 10 | 10 | 10 | 10 | 16 |
| Polymeric compound (G2)-2 | | | | | | | | |
| Polymeric compound (G3)-1 | | | | | | | | |
| Polymeric compound (G3)-2 | | | | | | | | |
| Alkali metal salt NaDBS | | | | | | | | 1.8 |
| Alkali metal salt LiOTs | | 1 | 1 | | | | | |
| Ionic liquid ImDBS | | | | 0.5 | 0.5 | | | |
| Ionic liquid ImES | | | | | | 0.4 | 0.4 | |
| Colorant | Phthalocyanine green | 0.3 | | | 0.3 | | 0.3 | |
| | Ultramarine blue | | 0.3 | | | | | |
| Modeling performance | | Good | Good | Good | Good | Good | Good | Good |
| Colorability | | Good | Good | - | Good | - | Good | - |
| SR | | $1 \times 10^{10}$ | $1 \times 10^{10}$ | $3 \times 10^{10}$ | $3 \times 10^{10}$ | $3 \times 10^{10}$ | $3 \times 10^{10}$ | $4 \times 10^{9}$ |

[Table 3]

| | | Example 15 | Example 16 | Example 17 | Example 18 | Example 19 | Example 20 | Example 21 |
|---|---|---|---|---|---|---|---|---|
| Thermoplastic resin | ABS resin (1) | 100 | 100 | 100 | 100 | 100 | 100 | 100 |
| | ABS resin (2) | | | | | | | |
| | PC resin (1) | | | | | | | |
| Polymeric compound (G2)-1 | | 27 | 34 | 34 | | | | |
| Polymeric compound (G2)-2 | | | | | 10 | 10 | 10 | 10 |
| Polymeric compound (G3)-1 | | | | | | | | |
| Polymeric compound (G3)-2 | | | | | | | | |
| Alkali metal salt NaDBS | | 3 | 4 | 4 | | 1 | 1 | |
| Alkali metal salt LiOTs | | | | | | | | 1 |
| Ionic liquid ImDBS | | | | | | | | |
| Ionic liquid ImES | | | | | | | | |
| Colorant | Phthalocyanine green | | | 0.3 | | | 0.3 | |
| | Ultramarine blue | | | | | | | |
| Modeling performance | | Good | Good | Good | Good | Good | Good | Good |
| Colorability | | - | - | Good | - | - | Good | - |
| SR | | $6 \times 10^{8}$ | $1 \times 10^{8}$ | $1 \times 10^{8}$ | $4 \times 10^{12}$ | $3 \times 10^{11}$ | $3 \times 10^{11}$ | $1 \times 10^{11}$ |

[Table 4]

| | | Example 22 | Example 23 | Example 24 | Example 25 | Example 26 | Example 27 | Example 28 |
|---|---|---|---|---|---|---|---|---|
| Thermoplastic resin | ABS resin (1) | 100 | 100 | 100 | 100 | 100 | 100 | 100 |
| | ABS resin (2) | | | | | | | |
| | PC resin (1) | | | | | | | |
| Polymeric compound (G2)-1 | | | | | | | | |
| Polymeric compound (G2)-2 | | 10 | 38 | | | | | |
| Polymeric compound (G3)-1 | | | | 10 | 10 | 10 | 10 | 10 |
| Polymeric compound (G3)-2 | | | | | | | | |
| Alkali metal salt NaDBS | | | | | 1 | 1 | | |
| Alkali metal salt LiOTs | | 1 | 4 | | | | | |
| Ionic liquid ImDBS | | | | | | | 0.5 | 0.5 |
| Ionic liquid ImES | | | | | | | | |
| Colorant | Phthalocyanine green | 0.3 | 0.3 | | | | | |
| | Ultramarine blue | | | | | 0.3 | | 0.3 |
| Modeling performance | | Good | Good | Good | Good | Good | Good | Good |
| Colorability | | Good | Good | - | - | Good | - | Good |
| SR | | $1 \times 10^{11}$ | $4 \times 10^{8}$ | $8 \times 10^{13}$ | $9 \times 10^{12}$ | $9 \times 10^{12}$ | $1 \times 10^{13}$ | $1 \times 10^{13}$ |

[Table 5]

| | | Example 29 | Example 30 | Example 31 | Example 32 | Example 33 | Example 34 | Example 35 |
|---|---|---|---|---|---|---|---|---|
| Thermoplastic resin | ABS resin (1) | 100 | 100 | 100 | 100 | 100 | 100 | 100 |
| | ABS resin (2) | | | | | | | |
| | PC resin (1) | | | | | | | |
| Polymeric compound (G2)-1 | | | | | | | | |
| Polymeric compound (G2)-2 | | | | | | | | |
| Polymeric compound (G3)-1 | | 27 | 27 | | | | | |
| Polymeric compound (G3)-2 | | | | 10 | 10 | 10 | 10 | 10 |
| Alkali metal salt NaDBS | | 2.5 | | | 1 | 1 | | |
| Alkali metal salt LiOTs | | | | | | | | |
| Ionic liquid ImDBS | | | 1.3 | | | | | |
| Ionic liquid ImES | | | | | | | 0.4 | 0.4 |
| Colorant | Phthalocyanine green | 0.3 | | | | 0.3 | | 0.3 |
| | Ultramarine blue | | 0.3 | | | | | |
| Modeling performance | | Good | Good | Good | Good | Good | Good | Good |
| Colorability | | Good | Good | - | - | Good | - | Good |
| SR | | $1 \times 10^{10}$ | $1 \times 10^{10}$ | $3 \times 10^{13}$ | $7 \times 10^{12}$ | $7 \times 10^{12}$ | $1 \times 10^{12}$ | $2 \times 10^{12}$ |

[Table 6]

| | | Example 36 | Example 37 | Example 38 | Example 39 | Example 40 | Example 41 |
|---|---|---|---|---|---|---|---|
| Thermoplastic resin | ABS resin (1) | 100 | 100 | | | | |
| | ABS resin (2) | | | 20 | 20 | 20 | 20 |
| | PC resin (1) | | | 80 | 80 | 80 | 80 |
| Polymeric compound (G2)-1 | | | | 10 | 16 | | |
| Polymeric compound (G2)-2 | | | | | | | |
| Polymeric compound (G3)-1 | | | | | | 10 | 16 |
| Polymeric compound (G3)-2 | | 24 | 24 | | | | |
| Alkali metal salt NaDBS | | | | | | | |
| Alkali metal salt LiOTs | | | | 1 | 1.8 | | |
| Ionic liquid ImDBS | | | | | | 0.5 | 0.8 |
| Ionic liquid ImES | | 1 | 1 | | | | |
| Colorant | Phthalocyanine green | | 0.3 | | | | |
| | Ultramarine blue | | | 0.3 | 0.3 | 0.3 | 0.3 |
| Modeling performance | | Good | Good | Good | Good | Good | Good |
| Colorability | | - | Good | Good | Good | Good | Good |
| SR | | $7 \times 10^{9}$ | $7 \times 10^{9}$ | $5 \times 10^{10}$ | $7 \times 10^{9}$ | $7 \times 10^{12}$ | $1 \times 10^{12}$ |

[Table 7]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Thermoplastic resin | ABS resin (1) | 100 | 100 | 100 | 100 | 100 | 100 | 100 |
| | ABS resin (2) | | | | | | | |
| | PC resin (1) | | | | | | | |
| Polymeric compound (G2)-1 | | | | | | | | 2 |
| Polymeric compound (G2)-2 | | | | | | | | |
| Polymeric compound (G3)-1 | | | | | | | | |
| Polymeric compound (G3)-2 | | | | | | | | |
| Alkali metal salt NaDBS | | | | 4 | | | | |
| Alkali metal salt LiOTs | | | | | 4 | | | |
| Ionic liquid ImDBS | | | | | | 1.3 | | |
| Ionic liquid ImES | | | | | | | 1 | |
| ABS resin with 15% by mass of carbon fiber compounded | | | | | | | | |
| Colorant | Phthalocyanine green | | 0.3 | 0.3 | 0.3 | 0.3 | 0.3 | |
| Modeling performance | | Good | Good | Poor | Poor | Poor | Poor | Good |
| Colorability | | - | Good | Good | Good | Good | Good | - |
| SR | | $2 \times 10^{16}$ | $2 \times 10^{16}$ | - | - | - | - | $7 \times 10^{15}$ |

[Table 8]

| | | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|
| Thermoplastic resin | ABS resin (1) | 100 | 100 | 100 | 100 | 100 | 100 | 100 |
| | ABS resin (2) | | | | | | | |
| | PC resin (1) | | | | | | | |
| Polymeric compound (G2)-1 | | 2 | 46 | | | | | |
| Polymeric compound (G2)-2 | | | | 2 | 2 | 46 | | |
| Polymeric compound (G3)-1 | | | | | | | 2 | 2 |
| Polymeric compound (G3)-2 | | | | | | | | |
| Alkali metal salt NaDBS | | 0.2 | | | 0.2 | | | |
| Alkali metal salt LiOTs | | | | | | | | |
| Ionic liquid ImDBS | | | | | | | | 0.1 |
| Ionic liquid ImES | | | | | | | | |
| ABS resin with 15% by mass of carbon fiber compounded | | | | | | | | |
| Colorant | Phthalocyanine green | | | | | | | |
| Modeling performance | | Good | Poor | Good | Good | Poor | Good | Good |
| Colorability | | - | - | - | - | - | - | - |
| SR | | $7 \times 10^{15}$ | - | $9 \times 10^{15}$ | $9 \times 10^{15}$- | - | $1 \times 10^{16}$- | $1 \times 10^{16}$- |

[Table 9]

| | | Comparative Example 15 | Comparative Example 16 | Comparative Example 17 | Comparative Example 18 | Comparative Example 19 | Comparative Example 20 | Comparative Example 21 |
|---|---|---|---|---|---|---|---|---|
| Thermoplastic resin | ABS resin (1) | 100 | 100 | 100 | 100 | | | |
| | ABS resin (2) | | | | | | | |
| | PC resin (1) | | | | | | | |
| Polymeric compound (G2)-1 | | | | | | | | |
| Polymeric compound (G2)-2 | | | | | | | | |
| Polymeric compound (G3)-1 | | 46 | | | | | | |
| Polymeric compound (G3)-2 | | | 2 | 2 | 46 | | | |
| Alkali metal salt NaDBS | | | | | | | | |
| Alkali metal salt LiOTs | | | | | | | | |
| Ionic liquid ImDBS | | | | | | | | |
| Ionic liquid ImES | | | | 0.1 | | | | |
| ABS resin with 15% by mass of carbon fiber compounded | | | | | | 100 | 100 | 100 |
| Colorant | Phthalocyanine green | | | | | | 0.3 | 10 |
| Modeling performance | | Poor | Good | Good | Poor | Good | Good | Good |
| Colorability | | - | - | - | - | - | Poor | Poor |
| SR | | - | $1 \times 10^{16}$ | $2 \times 10^{16}$ | -- | $5 \times 10^{11}$- | $5 \times 10^{11}$- | $8 \times 10^{11}$- |

[Table 10]

| | | Comparative Example 22 | Comparative Example 23 | Comparative Example 24 | Comparative Example 25 | Comparative Example 26 |
|---|---|---|---|---|---|---|
| Thermoplastic resin | ABS resin (1) | | | | | |
| | ABS resin (2) | 20 | 20 | 20 | 20 | 20 |
| | PC resin (1) | 80 | 80 | 80 | 80 | 80 |
| Polymeric compound (G2)-1 | | | | 2 | 2 | 46 |
| Polymeric compound (G2)-2 | | | | | | |
| Polymeric compound (G3)-1 | | | | | | |
| Polymeric compound (G3)-2 | | | | | | |
| Alkali metal salt NaDBS | | | | | 0.2 | |
| Alkali metal salt LiOTs | | | | | | |
| Ionic liquid ImDBS | | | | | | |
| Ionic liquid ImES | | | | | | |
| ABS resin with 15% by mass of carbon fiber compounded | | | | | | |
| Colorant | Phthalocyanine green | | 0.3 | | | |
| Modeling performance | | Good | Good | Good | Good | Poor |
| Colorability | | - | Good | - | - | - |
| SR | | $6 \times 10^{15}$ | $6 \times 10^{15}$ | $6 \times 10^{15}$ | $6 \times 10^{15}$ | - |

[Table 11]

| | | Example 42 | Example 43 | Example 44 | Example 45 | Example 46 | Example 47 |
|---|---|---|---|---|---|---|---|
| Thermoplastic resin | PLA resin (1) | 100 | 100 | 100 | 100 | 100 | 100 |
| Polymeric compound (G2)-1 | | 10 | 10 | 10 | 8 | 17 | |
| Polymeric compound (G3)-1 | | | | | | | 10 |
| Alkali metal salt NaDBS | | | 1 | 1 | 0.8 | 1.7 | |
| Colorant | Phthalocyanine green | | | 0.3 | 0.3 | 0.3 | |
| Modeling performance | | Good | Good | Good | Good | Good | Good |
| Colorability | | - | - | Good | Good | Good | - |
| SR | | $3 \times 10^{12}$ | $4 \times 10^{10}$ | $4 \times 10^{10}$ | $1 \times 10^{11}$ | $6 \times 10^{9}$ | $9 \times 10^{13}$ |

[Table 12]

| | | Example 48 | Example 49 |
|---|---|---|---|
| Thermoplastic resin | PLA resin (1) | 100 | 100 |
| Polymeric compound (G2)-1 | | | |
| Polymeric compound (G3)-1 | | 10 | 10 |
| Alkali metal salt NaDBS | | 1 | 1 |
| Colorant | Phthalocyanine green | | 0.3 |
| Modeling performance | | Good | Good |
| Colorability | | - | Good |
| SR | | $7 \times 10^{12}$ | $7 \times 10^{12}$ |

[Table 13]

| | | Comparative Example 27 | Comparative Example 28 | Comparative Example 29 | Comparative Example 30 | Comparative Example 31 | Comparative Example 32 |
|---|---|---|---|---|---|---|---|
| Thermoplastic resin | PLA resin (1) | 100 | 100 | 100 | 100 | 100 | 100 |
| Polymeric compound (G2)-1 | | | | | 2 | 2 | 46 |
| Polymeric compound (G3)-1 | | | | | | | |
| Alkali metal salt NaDBS | | | | 4 | | 0.2 | |
| Colorant | Phthalocyanine green | | 0.3 | 0.3 | | | |
| Modeling performance | | Good | Good | Good | Good | Good | Poor |
| Colorability | | - | Good | Good | - | - | - |
| SR | | $3 \times 10^{16}$ | $2 \times 10^{16}$ | $2 \times 10^{16}$ | $6 \times 10^{15}$ | $6 \times 10^{15}$ | - |

[Table 14]

| | | Comparative Example 33 | Comparative Example 34 | Comparative Example 35 |
|---|---|---|---|---|
| Thermoplastic resin | PLA resin (1) | 100 | 100 | 100 |
| Polymeric compound (G2)-1 | | | | |
| Polymeric compound (G3)-1 | | 2 | 2 | 46 |
| Alkali metal salt NaDBS | | | 0.2 | |
| Colorant | Phthalocyanine green | | | |
| Modeling performance | | Good | Good | Poor |
| Colorability | | - | - | - |
| SR | | $1 \times 10^{16}$ | $1 \times 10^{16}$ | - |

Each of Comparative Examples 3, 4, 5, and 6 could not produce any test piece because bleeding was observed from the nozzle of the 3D printer during modeling and the interlayer adhesiveness between resins was poor.

Each of Comparative Examples 9, 12, 15, 18, 26, 32, and 35 could not produce any test piece because stringing

from the nozzle was caused during modeling and the interlayer adhesiveness between resins was poor.

Each of Comparative Examples 1, 2, 7, 8, 10, 11, 13, 14, 16, 17, 22, 23, 24, 25, 27, 28, 29, 30, 31, 33, and 34 did not allow for practical use because the numerical value of the surface resistivity (SR value) was large and the antistatic performance was inferior.

The test piece obtained in Comparative Example 19, with the ABS resin with 15% by mass of a carbon fiber compounded, was black and each of the test pieces of Comparative Examples 20 and 21, with the pigment added, could not be colored, and it was clear that these test pieces were inferior in colorability.

It is clear from the results shown in the Tables that, according to the present invention, there is obtained not only a thermoplastic resin composition for fused deposition modeling, allowing a modeled body which is excellent in modeling performance and antistatic performance, furthermore which can be colored into various colors and which has diverse design properties to be obtained, but also a modeled body which is excellent in antistatic performance and which has excellent design properties by coloration, with the thermoplastic resin composition.

## Claims

**1.** A thermoplastic resin composition for fused deposition modeling, containing 3 to 45 parts by mass of one or more kinds of a polymeric compound (G) having the following polyether segment (A) and polymer segment (B), based on 100 parts by mass of a thermoplastic resin:

Polyether segment (A): a polyether segment derived from a compound (a) having one or more ethyleneoxy groups and having a hydroxyl group at each of both ends;
Polymer segment (B): one or more polymer segments selected from the group consisting of a polyester segment (D) and a polyamide segment (E).

**2.** The thermoplastic resin composition for fused deposition modeling according to claim 1, wherein the polymeric compound (G) is
a polymeric compound (G1) having a structure which not only has a polyether segment derived from polyethylene glycol (a1), as the polyether segment (A), but also has the polyester segment (D) as the polymer segment (B), the polyester segment (D) being a segment derived from a polyester (d3) obtained from a diol (d1) and a dicarboxylic acid (d2).

**3.** The thermoplastic resin composition for fused deposition modeling according to claim 2, wherein the diol (d1) is at least one selected from 1,4-butanediol and ethylene glycol, and the dicarboxylic acid (d2) is succinic acid, or a dicarboxylic acid mixture containing succinic acid.

**4.** The thermoplastic resin composition for fused deposition modeling according to claim 2 or 3, wherein the polymeric compound (G1) is one or more kinds of a polymeric compound (G2) obtained by reaction of the polyethylene glycol (a1), the polyester (d3) obtained from the diol (d1) and the dicarboxylic acid (d2), and an epoxy compound (C) having two or more epoxy groups.

**5.** The thermoplastic resin composition for fused deposition modeling according to claim 4, wherein the polymeric compound (G2) has a structure

which not only has a polyether block (A') constituted from the polyethylene glycol (al), as the polyether segment (A), but also has a polyester block (D') constituted from the polyester (d3), as the polyester segment (D), and which is obtained by binding via an ester bond or an ether bond formed by reaction of a hydroxyl group at an end of the polyethylene glycol (a1), a hydroxyl group or a carboxyl group at an end of the polyester (d3), and an epoxy group of the epoxy compound (C) or a hydroxyl group formed by reaction of the epoxy group.

**6.** The thermoplastic resin composition for fused deposition modeling according to claim 5, wherein the polymeric compound (G2) has a structure which is obtained by binding a block polymer (H) having a carboxyl group at each of both ends, the polymer being obtained by alternately binding the polyether block (A') and the polyester block (D') repeatedly via an ester bond, and the epoxy compound (C), via an ester bond.

**7.** The thermoplastic resin composition for fused deposition modeling according to claim 1, wherein the polymeric compound (G) is a block polymer (G3) having a structure

which not only has a polyether block (A') constituted from a compound (a) having one or more ethyleneoxy groups and having a hydroxyl group at each of both ends, as the polyether segment (A), but also has the polyamide segment (E) as the polymer segment (B), the polyamide segment (E) being a polyamide block (E'), and
in which the polyether block (A') and the polyamide block (E') are repeatedly bound via at least one bond selected from the group consisting of an ester bond, an amide bond, an ether bond, an imide bond and a urethane bond.

**8.** The thermoplastic resin composition for fused deposition modeling according to any one of claims 1 to 7, further containing 0.005 to 10 parts by mass of one or more selected from the group consisting of an alkali metal salt and an ionic liquid, based on 100 parts by mass of the thermoplastic resin.

**9.** The thermoplastic resin composition for fused deposition modeling according to any one of claims 1 to 8, further containing 0.0005 to 10 parts by mass of one or more kinds of a colorant, based on 100 parts by mass of the thermoplastic resin.

**10.** The thermoplastic resin composition for fused deposition modeling according to any one of claims 1 to 9, wherein the thermoplastic resin is one or more selected from the group consisting of an aromatic polyester, a degradable aliphatic polyester, a polystyrene-based resin, a copolymer of a polystyrene-based resin, an alloy of a polystyrene-based resin and an alloy of a copolymer of a polystyrene-based resin.

**11.** A filament for fused deposition modeling, obtained from the thermoplastic resin composition for fused deposition modeling according to any one of claims 1 to 10.

**12.** The filament for fused deposition modeling according to claim 11, having a thread-like shape having an average diameter of 1.55 to 1.95 mm.

**13.** A pellet for fused deposition modeling, obtained from the thermoplastic resin composition for fused deposition modeling according to any one of claims 1 to 10.

**14.** A modeled body obtained from the thermoplastic resin composition for fused deposition modeling according to any one of claims 1 to 10, by fused deposition modeling.

**15.** A modeled body obtained from the filament for fused deposition modeling according to claim 11 or 12, by fused deposition modeling.

**16.** A modeled body obtained from the pellet for fused deposition modeling according to claim 13, by fused deposition modeling.

**17.** A method for producing a modeled body, comprising producing a modeled body with any of the thermoplastic resin composition for fused deposition modeling according to any one of claims 1 to 10, the filament for fused deposition modeling according to claim 11 or 12, and the pellet for fused deposition modeling according to claim 13, by fused deposition modeling.

**18.** An antistatic agent for fused deposition modeling, containing one or more kinds of a polymeric compound (G) having the following polyether segment (A) and polymer segment (B):

Polyether segment (A): a polyether segment derived from a compound (a) having one or more ethyleneoxy groups and having a hydroxyl group at each of both ends;
Polymer segment (B): one or more polymer segments selected from the group consisting of a polyester segment (D) and a polyamide segment (E).

**19.** Use of an agent containing one or more kinds of a polymeric compound (G) having the following polyether segment (A) and polymer segment (B), as an antistatic agent for fused deposition modeling:

Polyether segment (A): a polyether segment derived from a compound (a) having one or more ethyleneoxy groups and having a hydroxyl group at each of both ends;
Polymer segment (B): one or more polymer segments selected from the group consisting of a polyester segment (D) and a polyamide segment (E).

**20.** A method for using an agent containing one or more kinds of a polymeric compound (G) having the following polyether segment (A) and polymer segment (B), as an antistatic agent for fused deposition modeling:

Polyether segment (A): a polyether segment derived from a compound (a) having one or more ethyleneoxy groups and having a hydroxyl group at each of both ends;
Polymer segment (B): one or more polymer segments selected from the group consisting of a polyester segment (D) and a polyamide segment (E).

**INTERNATIONAL SEARCH REPORT**

International application No.
**PCT/JP2023/006384**

**A. CLASSIFICATION OF SUBJECT MATTER**

***C08G 69/40***(2006.01)i; ***C08L 25/04***(2006.01)i; ***C08L 67/00***(2006.01)i; ***C08L 77/00***(2006.01)i; ***C08L 101/00***(2006.01)i; ***C08L 71/02***(2006.01)i; ***B33Y 10/00***(2015.01)i; ***B29C 64/118***(2017.01)i; ***C08G 63/66***(2006.01)i; ***B33Y 70/00***(2020.01)i
FI: C08L101/00; C08L67/00; C08L77/00; C08L71/02; C08L25/04; C08G63/66; C08G69/40; B29C64/118; B33Y10/00; B33Y70/00

According to International Patent Classification (IPC) or to both national classification and IPC

**B. FIELDS SEARCHED**

Minimum documentation searched (classification system followed by classification symbols)

C08G69/40; C08L25/04; C08L67/00; C08L77/00; C08L101/00; C08L71/02; B33Y10/00; B29C64/118; C08G63/66; B33Y70/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-146677 A (RICOH CO LTD) 27 September 2021 (2021-09-27)<br>claims 9-11, paragraph [0078], tables 1-2 | 2-17 |
| A | entire text | 18-20 |
| X | claims 9-11, paragraph [0078], tables 1-2 | 1 |
| Y | JP 7018534 B1 (SANYO CHEMICAL INDUSTRIES, LTD.) 10 February 2022 (2022-02-10)<br>paragraphs [0007], [0044]-[0062], [0077], [0081] | 2-17 |
| X | paragraphs [0007], [0044]-[0062], [0077], [0081] | 18-20 |
| A | JP 2021-154589 A (FUJIFILM BUSINESS INNOVATION CORP) 07 October 2021 (2021-10-07)<br>entire text | 1-20 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2023/006384**

| Patent document cited in search report | Publication date (day/month/year) | Patent family member(s) | Publication date (day/month/year) |
|---|---|---|---|
| JP 2021-146677 A | 27 September 2021 | US 2021/0292541 A1<br>tables 1-2<br>EP 3885142 A1 | |
| JP 7018534 B1 | 10 February 2022 | (Family: none) | |
| JP 2021-154589 A | 07 October 2021 | US 2021/0299946 A1<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016028887 A
- JP 2021091220 A
- JP 2005254583 A
- WO 2020202642 A
- WO 9515572 A
- JP H03258850 A
- JP H06345927 A